# EUROPEAN PATENT SPECIFICATION

(11) **EP 3 324 572 B1**
(45) Date of publication and mention of the grant of the patent: **12.05.2021**
(21) Application number: 15902502.2
(22) Date of filing: 28.08.2015
(51) Int. Cl.: H04W 12/00, H04W 12/02, H04L 9/32

(54) **INFORMATION TRANSMISSION METHOD AND MOBILE DEVICE**
INFORMATIONSÜBERTRAGUNGSVERFAHREN UND MOBILE VORRICHTUNG
PROCÉDÉ DE TRANSMISSION D'INFORMATIONS ET DISPOSITIF MOBILE

(43) Date of publication of application: 23.05.2018
(73) Proprietor: Huawei Technologies Co., Ltd., Longgang District Shenzhen, Guangdong 518129 (CN)
(72) Inventor: ZHU, Haoying, Shenzhen Guangdong 518129 (CN)
(74) Representative: Gill Jennings & Every LLP
(86) International application number: PCT/CN2015/088371
(87) International publication number: WO 2017/035695

(56) References cited:
- WO-A1-2015/047285
- CN-A- 103 259 659
- CN-A- 103 259 659
- CN-U- 204 360 381
- CN-U- 204 360 381
- US-A1- 2006 136 717
- US-A1- 2014 365 782

## Description

### TECHNICAL FIELD

The present invention relates to the field of mobile communications technologies, and in particular, to an information transmission method and a mobile device.

### BACKGROUND

With the popularization of the mobile Internet, communications services on intelligent terminals bring great convenience to users. For various communications manners, security is a universal and critical requirement of users. Currently, various endlessly emerging malware and junkware pose a serious threat to security of communications information and privacy protection of the users.

Current solutions for security protection of communications information are as follows: In a first solution, it is assumed that a communications channel cannot be trusted. Before sending information on a transmission channel, a sending party first encrypts the information, and then sends the information. After receiving the encrypted information, a receiving party performs decryption first and then performs subsequent processing on plaintext information. In a second solution, a peer-to-peer encryption technology is used. Encrypted information is decrypted only when a user has authorization to perform an operation. In a compromise method, a decryption condition is satisfied after a screen is unlocked, or a particular expiration time is set after authorization, and verification does not need to be repeated during the expiration time.

However, in the first solution, the information is stored in a plaintext state at both the sending party and the receiving party, or encryption processing and decryption processing are performed in a static manner. Malware can obtain the plaintext information by directly calling a decryption interface. In the second solution, the information is also in a plaintext state within a period of time and is consequently vulnerable to malware. Alternatively, the malware can decrypt ciphertext information by directly calling an interface. As a result, security of this solution is decreased. Therefore, security of communications information is not high in both the solutions.

CN204360381 relates to mobile equipment. CN103259659 relates to identity authentication device and method with digital signature, handwriting and fingerprint.

### SUMMARY

To resolve the foregoing technical problem, the present invention provides an information transmission method and a mobile device, to improve security of communications information.

Various aspects of the present disclosure have been defined in the independent claims. Further technical features of each of these aspects have been defined in the respective dependent claims.

In conclusion, in the present invention, encryption processing of plaintext information in a first mobile device is performed in an advanced execution environment, after ciphertext information is sent to a second mobile device, decryption processing of the ciphertext information is also performed in an advanced execution environment, and the plaintext information is decrypted and then presented to a user, where the plaintext information is destroyed under a predetermined condition instead of being permanently stored. Because a security and trust level of an advanced execution environment is higher than a security and trust level of a first execution environment, during encryption, it is difficult for malware to enter the advanced execution environment to obtain the plaintext information and an encryption process, and during decryption, it is difficult for the malware to enter the advanced execution environment to obtain a decryption process and the decrypted plaintext information. In this way, security of communications information can be improved.

### BRIEF DESCRIPTION OF DRAWINGS

FIG. 1 is a flowchart of an implementation of an information transmission method according to the present invention;
FIG. 2 is a flowchart of another implementation of an information transmission method according to the present invention;
FIG. 3 is a flowchart of still another implementation of an information transmission method according to the present invention;
FIG. 4 is a flowchart of still another implementation of an information transmission method according to the present invention;
FIG. 5 is a flowchart of still another implementation of an information transmission method according to the present invention;
FIG. 6 is a flowchart of still another implementation of an information transmission method according to the present invention;
FIG. 7 is a flowchart of still another implementation of an information transmission method according to the present invention;
FIG. 8 is a flowchart of still another implementation of an information transmission method according to the present invention;
FIG. 9 is a flowchart of still another implementation of an information transmission method according to the present invention;
FIG. 10 is a flowchart of still another implementation of an information transmission method according to the present invention;
FIG. 11 is an overall flowchart of an implementation of an information transmission method according to the present invention;
FIG. 12 is a schematic structural diagram of an implementation of a mobile terminal according to the present invention;
FIG. 13 is a schematic structural diagram of another implementation of a mobile terminal according to the present invention;
FIG. 14 is a schematic structural diagram of still another implementation of a mobile terminal according to the present invention;
FIG. 15 is a schematic structural diagram of still another implementation of a mobile terminal according to the present invention;
FIG. 16 is a schematic structural diagram of still another implementation of a mobile terminal according to the present invention;
FIG. 17 is a schematic structural diagram of still another implementation of a mobile terminal according to the present invention;
FIG. 18 is a schematic structural diagram of still another implementation of a mobile terminal according to the present invention;
FIG. 19 is a schematic structural diagram of still another implementation of a mobile terminal according to the present invention;
FIG. 20 is a schematic structural diagram of still another implementation of a mobile terminal according to the present invention;
FIG. 21 is a schematic diagram of a physical structure of an implementation of a mobile terminal according to the present invention;
FIG. 22 is a schematic diagram of software and hardware modules included in a specific application in practice of the mobile terminal in FIG. 21;
FIG. 23 is a schematic diagram of a physical structure of another implementation of a mobile terminal according to the present invention; and
FIG. 24 is a schematic diagram of software and hardware modules included in a specific application in practice of the mobile terminal in FIG. 23.

### DESCRIPTION OF EMBODIMENTS

First, technical content related to this application is described.

On a mobile device, common users may use multiple forms of communications services.
(1) According to a means of transmitting information, for example, in one form, a conventional short message and a conventional multimedia message are transmitted based on a mobile circuit switched domain (Circuit Switched, CS) network, and in another form, an IP message is transmitted based on an Internet Protocol (Internet Protocol, IP) network.
(2) According to a type of information/content transmitted through communication, the forms include a text form, a picture form, a short video form, a voice form, and the like.
(3) According to a manner of establishing communication, one form is a call-and-communicate manner such as a conventional call, and another form is an instant messaging manner.
(4) According to a manner of obtaining a message, in one form, an email or the like is obtained in a pull (pull) manner, and in another form, an instant message or the like is obtained in a push (push) manner.
(5) According to a quantity of people who participate in communication, there are a two-party form, a three-party form, a multi-party form, and the like.
(6) According to a time domain characteristic of information transmission, forms include a message mode (a message to be sent is formed locally first, and the message is then transmitted) and a real-time streaming mode (information is collected and at the same time transmitted). For example, a conventional voice call or the like is in the real-time streaming mode.
(7) According to a manner of buffering and forwarding a message, forms include a peer to peer mode (Peer to Peer, P2P. In the peer to peer mode, information is directly transmitted between two communicating parties), a mode in which a server/network device performs storage and forwarding, and the like.

These different types of communications services all have some common characteristics. For example, one sending party and one or more receiving parties are included in a communication process. Any type of communication content can be represented by using abstract digital information. Various communications manners between the sending and receiving parties can be simplified as an information transmission channel with fidelity, regardless of specific communication methods used in the communications manners, whether the communications manners are real-time or not, whether messages are buffered or not in the communications manners, and the like. The communications service described in this specification is a universal and abstract communication concept, and includes basic components such as a sending party, a receiving party, information sending, information receiving, and a transmission channel.

For various communications manners, security is a universal and critical requirement when users use the communications services. In processes of sending, transmitting, receiving, and displaying communication content, users expect all-round protection of the communication content. The communication content can be viewed and read by only a receiving party specified by a sending party. Furthermore, in a more flexible sending-party control mechanism, a sending party can set a quantity of times for information to be read, an information expiration time, and the like. Currently, various endlessly emerging malware and junkware on mobile devices pose a serious threat to security of communications information and privacy protection of the users, and a requirement for a communication security solution becomes more urgent.

For the foregoing requirement and problem, the present invention provides an information transmission method and a mobile device, which can satisfy a peer to peer communication security requirement of users, and are not limited to a specific communications manner above. The present invention can be applied to various specific communication-type service scenarios.

As described in the background, a technical problem that communication security is not high exists in existing technical solutions. While security is improved, problems of inconvenient use and poor user experience exist. For example:
A peer to peer encryption technology is used in a communication encryption solution, and ciphertext information is decrypted only with permission of a user (the user has authorization to perform an operation). For the operation of authorizing the user in this solution, a manner of verifying a PIN number/a password is usually used. However, the user needs to enter a password to read information each time, resulting in a problem of poor user experience. Moreover, the user is required to perform many operation steps. As a result, the solution is inconvenient to use, and the user becomes unwilling to use the solution. In practice, a compromise method is generally used. For example, a user does not directly control encryption and decryption processes. Instead, a decryption condition is satisfied after a screen is unlocked. Alternatively, a particular expiration time is set after a key is verified, and a verification password does not need to be repeatedly entered during the expiration time. This solution is vulnerable to malware because information exists in a plaintext form for a relatively long time, or during the expiration time, malware can decrypt ciphertext information by directly calling an interface, resulting in lowered security of the solution.

For another example, in a method of encryption by using a fingerprint in a communications service, in some cases, fingerprint information needs to be used to generate a key, making it difficult to use an existing fully-validated mature key generation algorithm. In addition, partial fingerprint information of a sending party needs to be provided to a receiving party, which adversely affects protection of privacy information of a user. Alternatively, a fingerprint is used only at a sending end, and a fingerprint of a receiving party is not used for control at a receiving end, resulting in inconvenience in experience. In addition, when a fingerprint template is used to derive a key used for encryption, a sending party needs to store fingerprint template information of each receiving party, which adversely affects protection of privacy of fingerprint information of a user.

Therefore, in the foregoing existing technologies, a problem of communication security exists in some technologies, and a problem of low user experience exists in some technologies. In the technical solutions in the present invention, the technical problem of communication security is resolved first, and the technical problem of user experience can be further resolved.

The following should be described first before the present invention is described in detail.

Specific implementation methods of the related solutions in the present invention are not within the scope of the present invention. Specific implementations of the related solutions are not limited in the present invention, and the present invention is not limited to related characteristics of a specific implementation.
(1) For a cryptographic algorithm used for protection of communications information, an algorithm generally used in the industry is used. In a specific implementation, an algorithm that is most suitable for a specific application may be comprehensively selected according to security, availability of a computing resource required for the algorithm, implementation complexity, a speed/power consumption, among other factors. The present invention is not limited to implementation characteristics of a specific cryptographic algorithm.
(2) A key used for protection of communications information is related to a selected specific cryptographic algorithm. For example, when an AES 256-bit algorithm is used for encryption and decryption of information, a 256-bit shared key needs to be used. The present invention is not limited to a form, a length, and a format of a specific key.
(3) As for a key generation algorithm, for a key required for encryption and decryption of communications information, a standard key generation algorithm in the industry is used. Specifically, key derivation (Key Derivation) may be performed based on a password (for example, a password or a pass phrase) entered by a user to generate a key, or a random number generator may be used to generate a random key satisfying a requirement. The present invention is not limited to a specific key generation algorithm, provided that a key satisfies a requirement of an encryption algorithm used to implement a solution. In addition, specially, a key generation manner used in the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.
(4) As for key exchange, allocation, and management methods for an information sending party and an information receiving party, that is, how a used key is generated, distributed, and managed, if a manner in which a sending party and a receiving party share a key is used for information protection, the sending party needs to generate a key and distribute the key to the receiving party, or the receiving party needs to generate a key and distribute the key to the sending party, or a third party (for example, a key server) needs to be responsible for generating a key and distributing the key to the sending party and the receiving party. If a manner of an asymmetrical key algorithm (for example, an RSA algorithm or an ECC algorithm) is used for information protection, key generation and key distribution are similar. In a key distribution process, other key algorithms and cryptographic algorithms are generally further used. The present invention is not limited to specific implementation methods of key distribution and management.
(5) As for enrollment and recognition solutions of a fingerprint, a biometric feature recognition method that may be used for user authentication includes, but is not limited to, a fingerprint recognition method, a voiceprint recognition method, or an iris recognition method. For a requirement of the present invention, a fingerprint recognition method is the most suitable method to use, because an easy-to-use experience can be achieved by means of fingerprint recognition. For example, a user places a finger on a fingerprint sensor, and real-time detection and determining can be performed several times to dozens of times per second by using an algorithm. This is quite favorable for both quick response of fingerprint recognition and instant feedback for a user. A similar effect cannot be achieved by using other biometric feature recognition mechanisms currently. Therefore, description of a solution in the present invention mainly revolves around fingerprint recognition, but the present invention is not limited to a specific fingerprint recognition mechanism and a specific fingerprint recognition algorithm. A principle of the present invention is also applicable to recognition solutions using biometric features other than a fingerprint.
(6) A specific information communication channel and a specific information communication method include, but are not limited to, Short Message Service, Multimedia Messaging Service, carrier data networks, Internet, and voice communication. The present invention is not limited to a specific communication channel and a specific communication method, provided that a communication means can transfer, from a sending party to one or more specified receiving parties with fidelity, encrypted information that needs to be passed.
(7) A first operating system in a first execution environment used by a mobile device includes, but is not limited to, Android, iOS, Windows Mobile, Linux, or Windows. The present invention is not limited to a specific implementation of the first operating system, provided that the implementation can provide an execution environment of a client application used in the present invention and provide a required operating system application programming interface API service.
(8) In an implementation, the present invention uses a trusted execution environment (Trusted Execution Environment, TEE) relatively independent from a first operating system of an existing mobile device, for example, a conventional operating system such as Android, Windows Mobile, iOS, or Linux, as an advanced execution environment whose security and trust level is higher than that of a first execution environment. An operating system of the TEE is equivalent to a secure operating system, and is independent from the conventional operating system. There may be multiple specific implementations of the TEE. The present invention is not limited to a specific implementation of TEE, provided that the implementation of TEE can satisfy the following conditions.
   First, code and data of the TEE, including a trusted application (Trusted Application, TA) in the TEE, is isolated from the conventional operating system, and the conventional operating system can access, by using only a predetermined restrained communications interface, a service provided by the TEE.
   Second, the implementation of the TEE can ensure integrity of all code logic running in the TEE and that the code logic is not damaged.
   Third, the TEE can securely store key material, and the key material is used by only an algorithm or a TA inside the TEE.
   Fourth, the TEE has a capability of secondary development and loading and running of a TA. The TA can be developed by using an interface function provided by the TEE, to implement particular application logic. In addition, the TA also has characteristics of the TEE such as isolation, integrity protection, and encryption protection.
   Fifth, a capability of implementing a fingerprint recognition algorithm and communications information encryption and decryption algorithms in the TEE or by using a TA is provided.
   Sixth, a secure storage capability is provided, and data sent from a conventional operating system can be received, encrypted, and then stored in an internal or an external memory. The encrypted data can be decrypted by only the TEE.
   To satisfy the foregoing requirements, during the implementation of the TEE, a key storage protection mechanism and an access control mechanism of hardware need to be used to ensure security. The specific implementations of the TEE may have many forms. For example, the TEE is implemented on an ARM CPU by using a Trustzone technology. Alternatively, the TEE is a secure element (Secure Element, SE) and a card operating system (Card OS, COS) implemented by using an IC card technology. The TEE may be implemented on a personal computer PC by using a trusted platform module (Trusted Platform Module, TPM) and a virtual machine hypervisor Hypervisor. The present invention is not limited to a specific implementation of the TEE.
(9) In another implementation, an advanced execution environment includes a second execution environment and a third execution environment. That is, a third execution environment may be added based on the second execution environment, where a security and trust level of the third execution environment is higher than that of the second execution environment. For example, the second execution environment may be a TEE trusted execution environment based on an ARM Trustzone technology, and the third execution environment may be a secure element SE and a card operating system COS implemented by using an IC card technology.

The present invention is described in detail below with reference to the accompanying drawings and implementations.

First, generally, information in an information transmission method according to the present invention is transmitted between at least two mobile devices. On a first mobile device and a second mobile device in the information transmission method, and a first mobile device and a second mobile device of the present invention, each mobile device includes a first execution environment and an advanced execution environment running in parallel and independent from each other. The first execution environment includes a first operating system, a first processor, and a first storage space. An operating system, a processor, and a storage space in the advanced execution environment are isolated from the first execution environment. A security and trust level of the advanced execution environment is higher than a security and trust level of the first execution environment. The first operating system can communicate with the operating system in the advanced execution environment by using a predetermined communications interface of the operating system in the advanced execution environment.

Generally, the first execution environment is an execution environment in which a user can directly perform operations and access and the like without any limitation, for example, an execution environment in a conventional operating system. Certainly, the first execution environment may also be another execution environment in which there are some limitations in aspects of operation, access, and the like for a user. The advanced execution environment is an execution environment in which there is a particular limitation in aspects of operation, access, and the like for a user. A user, a program, and a variety of application software cannot freely enter the advanced execution environment. However, the security and trust level of the advanced execution environment is higher than the security and trust level of the first execution environment. That is, in the first execution environment, a third party cannot freely enter the advanced execution environment without any limitation. However, in the advanced execution environment, a third party can freely enter the first execution environment without any limitation. For example, compared with an operation, access, and the like performed in the first execution environment, an operation, access, and the like performed in the advanced execution environment are less likely to be attacked, monitored, peeped, and changed by malware, and the operation, access, and the like performed in the advanced execution environment are protected by the advanced execution environment. Compared with various data stored in the first execution environment, various data stored in the advanced execution environment is less likely to be attacked, monitored, peeped, and changed by malware, and the various data stored in the advanced execution environment is protected by the advanced execution environment. Therefore, the advanced execution environment is more secure and trustable for a user.

Because the first execution environment and the advanced execution environment have different security and trust levels, the first execution environment cannot freely communicate with the advanced execution environment, and a predetermined dedicated communications interface needs to be used instead. The predetermined communications interface is an interface that is determined in advance and that is used for communication between the first execution environment and the advanced execution environment.

It should be noted that, the information in the information transmission method according to the present invention may also be transmitted between an execution environment of a local operating system and an execution environment of a cloud operating system. For example, the execution environment of the local operating system is the first execution environment, and the execution environment of the cloud operating system is the advanced execution environment. In this case, the predetermined communications interface may be a virtual communications interface.

The first processor in the first execution environment and the processor in the advanced execution environment may be physically separate or logically separate, and the first storage space in the first execution environment and the storage space in the advanced execution environment may be physically separate or logically separate.

The first execution environment is an execution environment whose security and trust level is lower than that of the advanced execution environment, and the advanced execution environment and the first execution environment are isolated. That is, in the first execution environment, a user or an application program or the like cannot freely enter the advanced execution environment. The first operating system is a conventional operating system used by an existing mobile terminal, and includes, but is not limited to, Android, iOS, Windows Mobile, Linux, or Windows.

The advanced execution environment may include one or more execution environments whose security and trust levels are higher than that of the first execution environment.

For example, the advanced execution environment is a second execution environment. Each mobile device includes a first execution environment and a second execution environment. The second execution environment includes a second operating system, a second processor, and a second storage space that are isolated from the first execution environment. The first operating system may communicate with the second operating system by using a predetermined communications interface of the second operating system. Specifically, the second execution environment is a trusted execution environment TEE.

For another example, the advanced execution environment includes a second execution environment and a third execution environment. A security and trust level of the third execution environment is higher than a security and trust level of the second execution environment. Each mobile device includes a first execution environment, a second execution environment, and a third execution environment. The second execution environment includes a second operating system, a second processor, and a second storage space that are isolated from the first execution environment. The third execution environment includes a third operating system, a third processor, and a third storage space that are separately isolated from the first execution environment and the second execution environment. The first operating system may communicate with the second operating system by using a predetermined communications interface of the second operating system, and/or the first operating system may communicate with the third operating system by using a predetermined communications interface of the third operating system, and/or the second operating system may communicate with the third operating system by using a predetermined communications interface of the third operating system.

For example, the second execution environment is a TEE, and the second operating system may be a secure operating system in the TEE. Alternatively, the third execution environment is a secure element execution environment SE, and the third operating system is a secure operating system in the SE.

Generally, the third execution environment SE has a security and trust level higher than those of the first execution environment and the second execution environment, but has limited resources, and is suitable for implementing core functions related to key/encryption and decryption algorithms/core security. In this case, the third execution environment may undertake the following functions.
(1) Keys required for encryption, decryption, signing, and signature verification may be stored in the third storage space (or a third memory) in the third execution environment.
(2) Alternatively, a part of the foregoing keys, or a part of or all of parameters required for deriving the foregoing key may be stored in the third storage space (or the third memory) in the third execution environment.
(3) The foregoing keys may be encrypted and stored in the second storage space (or a second memory) in the second execution environment, and keys for encrypting and decrypting the foregoing keys may be stored in the third storage space (or the third memory) in the third execution environment.
(4) Biometric feature data required for fingerprint recognition may be stored in the third storage space (or the third memory) in the third execution environment.
(5) A template matching algorithm designed for fingerprint recognition may be run in the third execution environment. For example, in the second execution environment, biometric feature data is extracted according to a collected fingerprint image, and sent to the third execution environment, so that a comparison operation and a matching operation are performed in the third execution environment.
(6) Biometric feature data required for fingerprint recognition may be encrypted and stored in the second storage space (or the second memory) in the second execution environment, and keys for encrypting and decrypting the biometric feature data may be stored in the third storage space (or the third memory) in the third execution environment.
(7) Alternatively, another combination may also be used. This may be determined according to an actual application case, and is not limited herein.

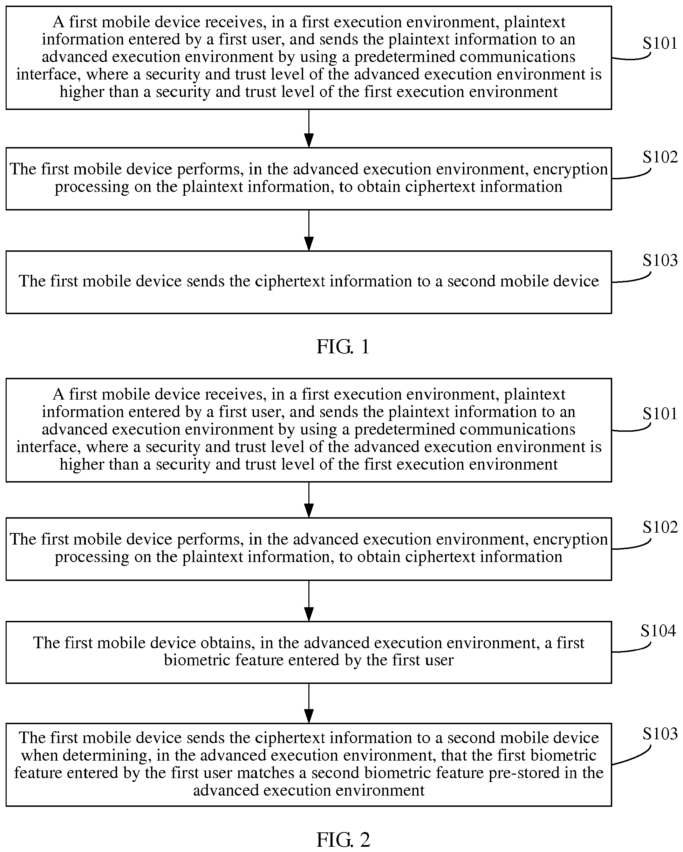

Referring to FIG. 1, FIG. 1 is a flowchart of an implementation of an information transmission method according to the present invention. The implementation is a flowchart at a sending end, and includes the following steps.

Step S101. A first mobile device receives, in a first execution environment, plaintext information entered by a first user, and sends the plaintext information to an advanced execution environment by using a predetermined communications interface, where a security and trust level of the advanced execution environment is higher than a security and trust level of the first execution environment.

The first user is a sender, and the first execution environment is an execution environment in which the first user may perform an operation or access or the like. The plaintext information is information that can be read and can be directly understood, and is original data before encryption.

Specifically, the first mobile device receives, in a first operating system in the first execution environment, the plaintext information of the first user, and sends the plaintext information to an operating system in the advanced execution environment by using the predetermined communications interface.

Step S102. The first mobile device performs, in the advanced execution environment, encryption processing on the plaintext information, to obtain ciphertext information.

The ciphertext information is encrypted information, is output information that is obtained by disguising or transforming the plaintext information and that cannot be directly understood, and may be restored to the plaintext information by using an algorithm.

Specifically, the first mobile device performs encryption processing on the plaintext information in the operating system in the advanced execution environment by using an encryption key and an encryption algorithm, to obtain the ciphertext information. The encryption key is pre-stored in a storage space in the advanced execution environment. Alternatively, the encryption key is generated by using parameters of the encryption key, and at least one of the parameters of the encryption key is stored in the storage space in the advanced execution environment.

Encryption and decryption are a pair of corresponding operations, and required keys are an encryption key Ke and a decryption key Kd. According to different used algorithms, Ke and Kd may be the same or may be different.

An encryption key and an encryption algorithm of a sending party correspond to a decryption key and a decryption algorithm of a receiving party. The sending party and the receiving party may be determined in advance, and stored and set in respective advanced execution environments. Alternatively, the keys (the encryption key and the decryption key) are not directly stored. Instead, some related parameters are stored, and to obtain a key, the required key may be obtained by using these parameters and by using a key derivation algorithm (Key Derivation). There may be one or more parameters for key derivation. If there is only one parameter, the parameter may be stored in a second storage space or a third storage space. If multiple parameters are used, the parameters may be separately stored in one or more of a first storage space, the second storage space, or the third storage space, where at least one parameter should be stored in the second storage space or the third storage space.
Key exchange, allocation, and management methods between a sender and a receiver are described above, and details are not described herein again.

Encryption processing on the plaintext information is performed in the advanced execution environment. Therefore, encryption security can be ensured. Further, the encryption key is pre-stored in the storage space in the advanced execution environment, or at least one of the parameters for generating the encryption key is stored in the storage space in the advanced execution environment. Therefore, encryption security can further be ensured, and at the same time, the encryption key is prevented from being deciphered by malware, thereby ensuring communication security.

Step S103. The first mobile device sends the ciphertext information to a second mobile device.

In this step, the ciphertext information may be sent in the first operating system, or may be sent in the operating system in the advanced execution environment. If the ciphertext information is sent in the first operating system, the ciphertext information needs to be returned to the first operating system. If the ciphertext information is sent in the operating system in the advanced execution environment, the first operating system further needs to send related information such as an address of a receiving party to the operating system in the advanced execution environment. A specific implementation is not limited herein.

In the present invention, encryption processing of plaintext information in a first mobile device is performed in an advanced execution environment, and ciphertext information is then sent to a second mobile device. Because a security and trust level of the advanced execution environment is higher than a security and trust level of a first execution environment, during encryption, it is difficult for malware to enter the advanced execution environment to obtain the plaintext information and an encryption process, so that security of communications information can be improved. In addition, specially, an encryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

The advanced execution environment is a trusted execution environment TEE. For a specific description of the TEE, refer to the foregoing content. Details are not described herein again.

Before step S102, the method may further include:
presenting, by the first mobile device, in the advanced execution environment, the plaintext information to the first user by using an interface in the advanced execution environment, and receiving confirmation of the first user for the plaintext information.

By using this step, communication security can be improved and reliability can be improved.

If the advanced execution environment is a TEE, during specific implementation, this step may be: presenting, by a corresponding trusted application (TA) of the sending party in the TEE, to the first user by using a trusted interface, complete information to be sent (plaintext information) as well as content, for example, an address of a receiving party and a sending time, related to the information to be sent, for confirmation by the first user. This step is necessary to prevent content of the plaintext information from being tampered with by malware or a hacker in a process in which the content of the plaintext information is submitted on a side of a conventional operating system or at a TEE communications interface. The trusted interface is an interface directly presented to the first user by the trusted application in the TEE (by using a child window or a full screen). The trusted interface can prevent, by using a protection mechanism provided by the TEE, content on the interface from being tampered with, damaged, blocked, or counterfeited, to ensure that information seen by the first user is consistent with real information.

A confirmation process may be that the user directly taps a confirmation button on the interface or presses a physical button to indicate confirmation. In actual application, if confirmation is also required before the sending in step S103, the confirmation before step S102 and the confirmation in step S103 may be combined.

Certainly, regardless of which confirmation manner or process is used, in actual application, a biometric feature recognition manner may be used for confirmation. The biometric feature recognition manner may also be used for authorizing the user. Specifically, a fingerprint may be used. To enhance security, fingerprint enrollment (initialization), generation and storage of a fingerprint template, fingerprint recognition, and the like may be implemented in the advanced execution environment, to ensure integrity of implementation and encryption protection for fingerprint information/fingerprint template data of the user, for example, implemented in a TEE environment, and specifically a fingerprint recognition TA may be used; or, as described above, implemented in a TEE and an SE together.

After confirmation or authentication through fingerprint recognition, the sending party may further sign the information by using a signature key, to prove the integrity of the information, and prove that the information is indeed generated by the sender (non-repudiation is provided). Information signing data needs to be sent together with the information to be sent, so that the receiving party verifies correctness of a signature. It should be noted that, the signature key, a signature verification key, and algorithms of the sending party and the receiving party have been predetermined, and the sending party and the receiving party have both obtained the corresponding signature key/certificate and algorithms.

It should be noted that, signing and signature verification (signature verification) is another pair of corresponding operations, and required keys are a signature key Ks and a signature verification key Kv. According to different used algorithms, Ks and Kv may be the same or may be different.

By using fingerprint recognition for confirmation or authentication and authorization or the like, user experience can also be improved, making the user feel without doubt that the user is participating in a communication security process.

Specifically, referring to FIG. 2, in this case, before step S103 (that is, before the sending), the method may further include the following step.

Step S104. The first mobile device obtains, in the advanced execution environment, a first biometric feature entered by the first user.

In a specific implementation, the obtaining a first biometric feature entered by the first user may be implemented by using a biometric feature recognition module. That is, the first biometric feature entered by the first user is obtained by using the biometric feature recognition module.

In this case, step S103 may be specifically:
sending the ciphertext information to the second mobile device when the first mobile device determines, in the advanced execution environment, that the first biometric feature entered by the first user matches a second biometric feature pre-stored in the advanced execution environment.

The determining that the first biometric feature entered by the first user matches a second biometric feature pre-stored in the advanced execution environment is comparing the first biometric feature with the second biometric feature, and determining that a difference between the first biometric feature and the second biometric feature falls within a predetermined range. The second biometric feature is pre-stored in the storage space in the advanced execution environment.

The biometric feature includes, but is not limited to, a fingerprint, an iris, or a voiceprint.

The biometric feature recognition module is a fingerprint recognition module.

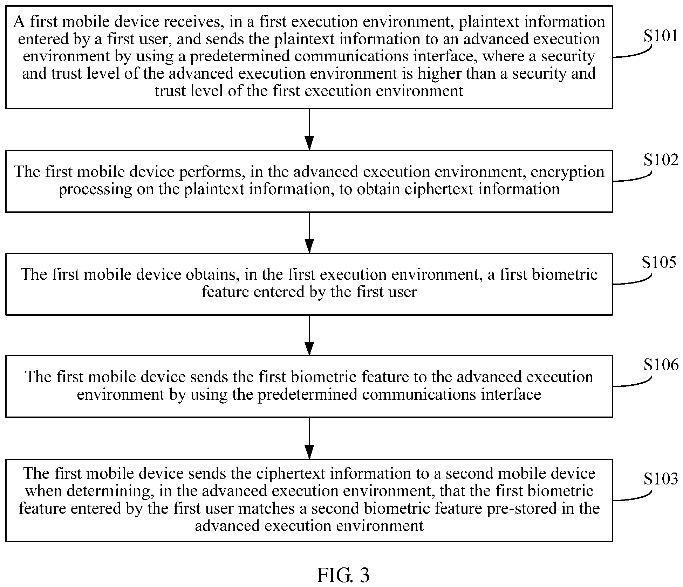

Certainly, the obtaining a first biometric feature entered by the first user may also be performed in the first execution environment. As shown in FIG. 3, before step S103, the method may further include the following steps.

Step S105. The first mobile device obtains, in the first execution environment, a first biometric feature entered by the first user.

Step S106. The first mobile device sends the first biometric feature to the advanced execution environment by using the predetermined communications interface.

In this case, step S103 may be specifically:
sending the ciphertext information to the second mobile device when the first mobile device determines, in the advanced execution environment, that the first biometric feature entered by the first user matches a second biometric feature pre-stored in the advanced execution environment.

If a signature key is further used to sign the information, the following implementation may be used.

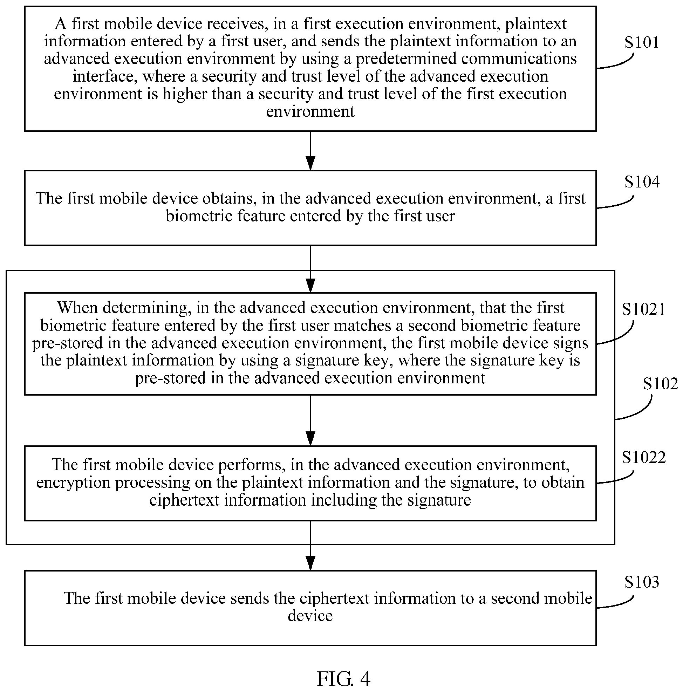

Referring to FIG. 4, before step S102, the method may further include the following step.

S104. The first mobile device obtains, in the advanced execution environment, a first biometric feature entered by the first user.

In this case, step S102 may specifically include the following steps.

Step S1021. When determining, in the advanced execution environment, that the first biometric feature entered by the first user matches a second biometric feature pre-stored in the advanced execution environment, the first mobile device signs the plaintext information by using a signature key, where the signature key is pre-stored in the advanced execution environment.

Step S1022. The first mobile device performs, in the advanced execution environment, encryption processing on the plaintext information and the signature, to obtain ciphertext information including the signature.

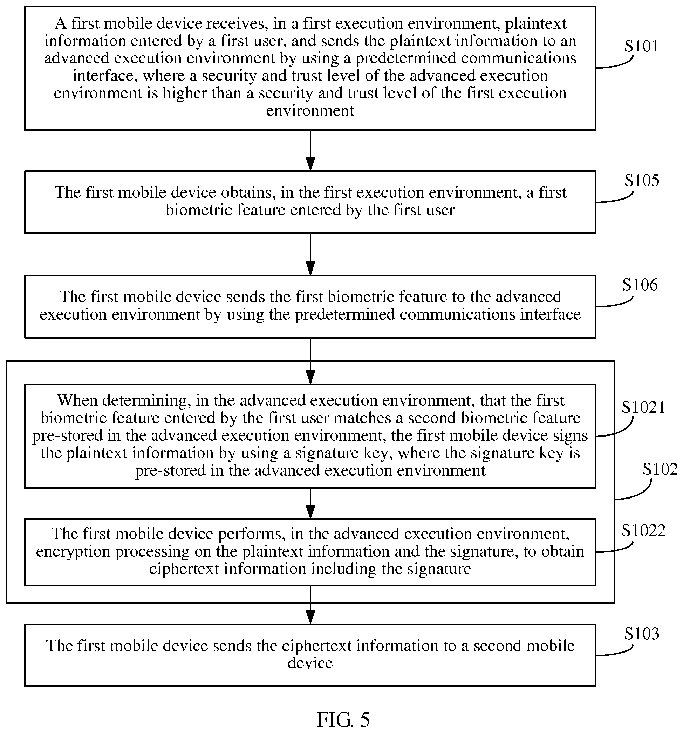

Certainly, the obtaining a first biometric feature entered by the first user may also be performed in the first execution environment. Referring to FIG. 5, before step S102, the method may further include the following steps.

S105. The first mobile device obtains, in the first execution environment, a first biometric feature entered by the first user.

Step S106. The first mobile device sends the first biometric feature to the advanced execution environment by using the predetermined communications interface.

In this case, step S102 may specifically include the following steps.

Step S1021. When determining, in the advanced execution environment, that the first biometric feature entered by the first user matches a second biometric feature pre-stored in the advanced execution environment, the first mobile device signs the plaintext information by using a signature key, where the signature key is pre-stored in the advanced execution environment.

Step S1022. The first mobile device performs, in the advanced execution environment, encryption processing on the plaintext information and the signature, to obtain ciphertext information including the signature.

Certainly, in actual application, the steps of confirming the plaintext information by the user, matching the biometric feature of the user, and signing the information by using the signature key by the user may be combined and coordinately performed. A performing order and process are not limited to the foregoing manners, and are not limited herein.

If the advanced execution environment includes a second execution environment and a third execution environment, that the first mobile device determines, in the advanced execution environment, that the first biometric feature entered by the first user matches a second biometric feature pre-stored in the advanced execution environment may include:
determining, by the first mobile device, in the second execution environment, that the first biometric feature entered by the first user matches the second biometric feature pre-stored in the second execution environment; or
determining, by the first mobile device, in the third execution environment, that the first biometric feature entered by the first user matches the second biometric feature pre-stored in the second execution environment; or
separately determining, by the first mobile device, in the second execution environment and the third execution environment, that the first biometric feature entered by the first user matches the second biometric feature pre-stored in the second execution environment.

After step S103, the method may further include:
storing, by the first mobile device, the ciphertext information in the advanced execution environment or storing the ciphertext information in the first execution environment, to make it convenient for the first user to view the ciphertext information.

Specifically, the first mobile device stores the ciphertext information in the storage space in the advanced execution environment or stores the ciphertext information in a storage space in the first execution environment.

When the ciphertext information is stored, the ciphertext information may be the sent ciphertext information Ea. Alternatively, when the ciphertext information is stored, the plaintext information is encrypted by using another encryption key and a same encryption algorithm/different encryption algorithms, to obtain ciphertext information Eb, and the ciphertext information Eb is then stored. The ciphertext information Eb herein is different from the foregoing ciphertext information Ea for sending. If this method is used, the foregoing signing part may be omitted. When encryption is performed again, an encryption algorithm and an encryption key should also be implemented in the advanced execution environment. Because the information that needs to be stored is already a ciphertext, a specific storage operation may not be completed in the advanced execution environment.

When the first user intends to view the ciphertext information, the first user may view the ciphertext information by authenticating a fingerprint.

Step 1. The first user checks an outbox, and determines, according to a receiver, a sending time, and the like, information that needs to be viewed. At this time, content of encrypted information has not been decrypted, and a plaintext cannot be viewed yet. In this case, encrypted data or an encryption identifier may be presented to the first user, to indicate that the information is encrypted and the plaintext cannot be viewed.

Step 2. The encrypted information that the first user currently intends to view is read from a corresponding memory and then placed in a cache space in the advanced execution environment, preparing to perform decryption. An objective of placing the encrypted information in the cache space is to improve a processing speed and improve user experience. Certainly, instead of performing this step in advance, the encrypted information may also be read during decryption.

Step 3. The first user places a finger on a fingerprint sensor, and recognition and comparison are performed on a fingerprint of the first user. Fingerprint recognition can be performed in real time and continuously by using an algorithm. After recognition succeeds, a corresponding fingerprint recognition success signal is output. As described above, the fingerprint recognition herein is implemented in the advanced execution environment.

Step 4. After fingerprint recognition succeeds, the information to be decrypted is read from the memory in the advanced execution environment (for example, a TA application in a TEE), or the encrypted information cached in step 2 is accessed, and a decryption key corresponding to the encrypted information is used to decrypt the encrypted information, to obtain original plaintext information. The decryption herein may correspond to two cases. In one case, the ciphertext information Ea from the memory is ciphertext information Ea sent to the second mobile device. That is, the ciphertext information Ea is directly stored. In the other case, when the ciphertext information Ea is stored, the ciphertext information Ea is not directly stored. Instead, when the ciphertext information Ea is stored, the plaintext information is encrypted by using another encryption key and a same encryption algorithm/different encryption algorithms, to obtain ciphertext information Eb, and the ciphertext information Eb is then stored. The ciphertext information Eb herein is different from the foregoing ciphertext information Ea for sending.

Regardless of which of the foregoing ciphertext information is used, a decryption key and a decryption algorithm used during decryption correspond to an encryption key and an encryption algorithm used during information encryption. A specific key management method and encryption and decryption algorithms are not limited.

Step 5. The plaintext information is presented to the first user. Herein, the plaintext information may be transferred to an application on a side of a conventional operating system in the first execution environment for presentation, or may be presented by using an interface in the advanced execution environment, for example, presented by using a trusted UI interface in the TEE.

Step 6. A fingerprint recognition result of the first user is monitored and compared in real time. If the fingerprint of the first user leaves the fingerprint sensor, or the fingerprint recognition fails, an abnormality signal is instantly given.

Step 7. After the abnormality signal is received, a decryption operation on the encrypted information is immediately stopped, and the plaintext that has been decrypted is immediately deleted. For the plaintext information that has been sent to the side of the conventional operating system, the application on the side of the conventional operating system is also instructed to immediately delete the plaintext information, and the plaintext information that has been presented on the UI interface is also immediately cleared. In this way, the user may receive a UI feedback in real time. That is, when the plaintext information cannot be read because the fingerprint leaves or the fingerprint recognition fails, the user can continue to read the information only after authentication is performed again by using the fingerprint.

In this solution, the first user needs to press the finger on the fingerprint sensor to read the encrypted information in the outbox. The fingerprint sensor performs monitoring in real time. Once the finger of the user leaves or the fingerprint recognition fails, the decrypted plaintext information is instantly removed. The first user can obtain a real-time feedback. The first user clearly knows that decryption of the encrypted information relies on authorizing the first user through fingerprint recognition, providing the first user with intuitive experience of information encryption and decryption, making security perceivable, thereby improving user experience.

It should be noted that, in specific actual application, the foregoing corresponding steps may be combined or omitted. This is not limited herein.

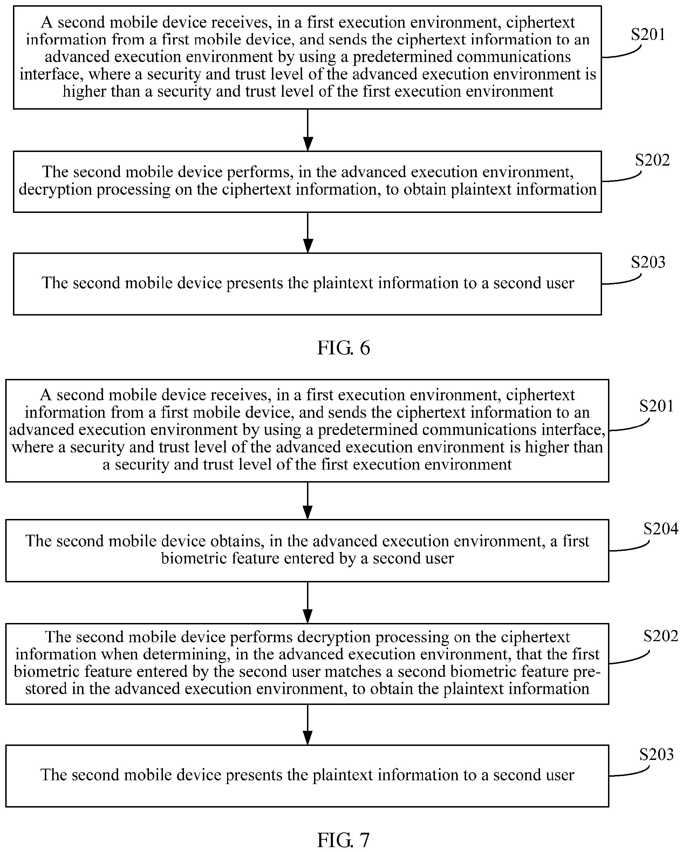

Referring to FIG. 6, FIG. 6 is a flowchart of still another implementation of an information transmission method according to the present invention. This implementation is about a flowchart at a receiving end. For a description of related content, refer to the foregoing description, and details are not described herein again. The method includes the following steps.

Step S201. A second mobile device receives, in a first execution environment, ciphertext information from a first mobile device, and sends the ciphertext information to an advanced execution environment by using a predetermined communications interface, where a security and trust level of the advanced execution environment is higher than a security and trust level of the first execution environment.

Specifically, the second mobile device receives, in a first operating system in the first execution environment, the ciphertext information from the first mobile device, and sends the ciphertext information to an operating system in the advanced execution environment by using the predetermined communications interface.

Step S202. The second mobile device performs, in the advanced execution environment, decryption processing on the ciphertext information, to obtain plaintext information.

Specifically, the second mobile device performs decryption processing on the ciphertext information in the operating system in the advanced execution environment by using a corresponding decryption key and a corresponding decryption algorithm, to obtain the plaintext information. The decryption key is pre-stored in a storage space in the advanced execution environment. Alternatively, the decryption key is generated by using parameters of the decryption key, and at least one of the parameters of the decryption key is stored in the storage space in the advanced execution environment.

Step S203. The second mobile device presents the plaintext information to a second user.

After presenting the plaintext information to the second user, the second mobile device destroys the plaintext information under a predetermined condition.

The predetermined condition is a condition for destroying the plaintext information. For example, the predetermined condition may be that the user leaves an application interface, the user exits or pauses an application, an expiration time is reached, and the like.

In this implementation of the present invention, after receiving ciphertext information in a first execution environment, a second mobile device performs decryption in an advanced execution environment, and presents plaintext information to a user after decryption, where the plaintext information is destroyed under a predetermined condition instead of being permanently stored. Because a security and trust level of the advanced execution environment is higher than a security and trust level of the first execution environment, during decryption, it is difficult for malware to enter the advanced execution environment to obtain a decryption process and the decrypted plaintext information, so that security of communications information can be improved. In addition, specially, a decryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

After step S202, the decrypted plaintext information may be encrypted again by using encryption software in a TEE, by using another encryption key (which is different from the decryption key used for decryption), and by using a same encryption algorithm or different encryption algorithms, and then stored in a local memory. That is, after the ciphertext information Ea is decrypted and the plaintext information is obtained in step S202, when the ciphertext information Ea is stored, the ciphertext information Ea is not directly stored. Instead, the plaintext information is encrypted by using another encryption key and a same encryption algorithm/different encryption algorithms, to obtain ciphertext information Eb, and the ciphertext information Eb is then stored. The ciphertext information Eb herein is different from the ciphertext information Ea that is received before from the first mobile device.

The encryption key of the stored encrypted information is managed by the current device. This is not limited by different communication objects (sending parties). Therefore, a key management method is relatively simple.

The advanced execution environment is a trusted execution environment TEE. For a specific description of the TEE, refer to the foregoing content. Details are not described herein again.

Referring to FIG. 7, before step S202, the method may further include the following step.

Step S204. The second mobile device obtains, in the advanced execution environment, a first biometric feature entered by a second user.

In this case, step S202 may be specifically:
performing decryption processing on the ciphertext information when the second mobile device determines, in the advanced execution environment, that the first biometric feature entered by the second user matches a second biometric feature pre-stored in the advanced execution environment, to obtain the plaintext information.

The determining that the first biometric feature entered by the second user matches a second biometric feature pre-stored in the advanced execution environment is comparing the first biometric feature and the second biometric feature, and determining that a difference between the first biometric feature and the second biometric feature falls within a predetermined range. The second biometric feature is pre-stored in the storage space in the advanced execution environment.

In this manner, whether a receiver is an authorized receiving party whose information can be verified can be determined before decryption.

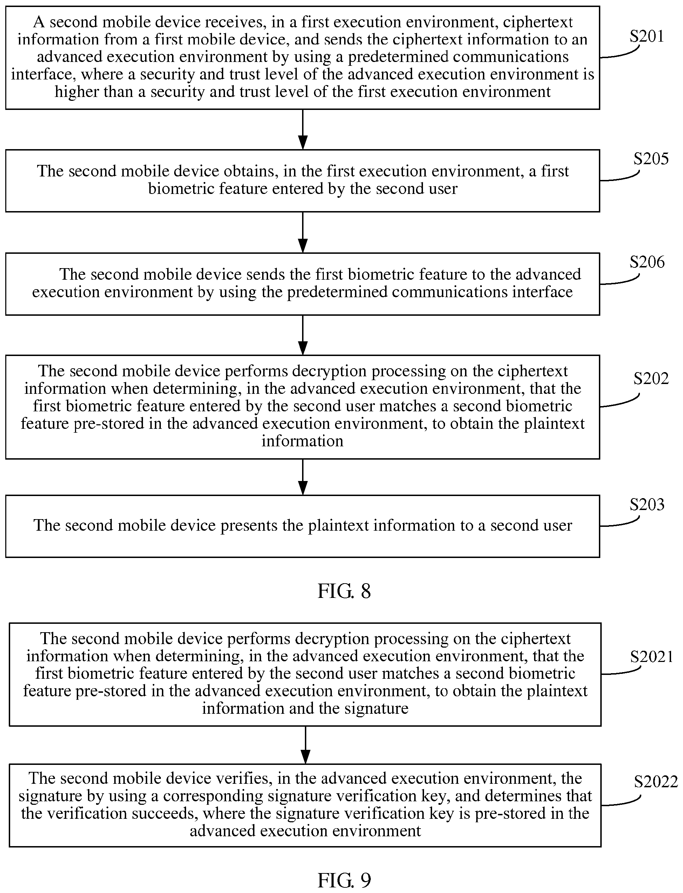

Certainly, the obtaining a first biometric feature entered by the second user may also be performed in the first execution environment. As shown in FIG. 8, before step S202, the method may further include the following steps.

Step S205. The second mobile device obtains, in the first execution environment, a first biometric feature entered by the second user.

Step S206. The second mobile device sends the first biometric feature to the advanced execution environment by using the predetermined communications interface.

In this case, step S202 may be specifically:
performing decryption processing on the ciphertext information when the second mobile device determines, in the advanced execution environment, that the first biometric feature entered by the second user matches a second biometric feature pre-stored in the advanced execution environment, to obtain the plaintext information.

If the ciphertext information is ciphertext information including a signature, referring to FIG. 9, step S202 may specifically include the following steps.

Step S2021. The second mobile device performs decryption processing on the ciphertext information when determining, in the advanced execution environment, that the first biometric feature entered by the second user matches a second biometric feature pre-stored in the advanced execution environment, to obtain the plaintext information and the signature.

Step S2022. The second mobile device verifies, in the advanced execution environment, the signature by using a corresponding signature verification key, and determines that the verification succeeds, where the signature verification key is pre-stored in the advanced execution environment.

This step is mainly used for a case in which there is a signature of a sending party, so as to further ensure communication security. If the verification fails, it indicates that the information may be counterfeited, and discarding processing may be performed on the information or a warning prompt may be given on a user interface.

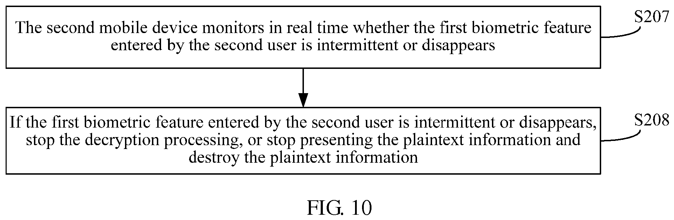

Referring to FIG. 10, the method further includes the following steps.

Step S207. The second mobile device monitors in real time whether the first biometric feature entered by the second user is intermittent or disappears.

Step S208. If the first biometric feature entered by the second user is intermittent or disappears, stop the decryption processing, or stop presenting the plaintext information and destroy the plaintext information.

A decryption operation may be immediately stopped after a signal is received, and the plaintext information that has been decrypted needs to be immediately destroyed. For plaintext information that has been sent to the side of the conventional operating system in the first execution environment, an application on the side of the conventional operating system is also instructed to immediately destroy the plaintext information, and plaintext information that has been presented on a UI interface is also immediately destroyed. In this case, the second user may receive a real-time feedback. That is, the plaintext information cannot be read, and the second user can continue to read the plaintext information only after authentication is performed again by using a biometric feature such as a fingerprint.

Step S203 may specifically include: presenting, by the second mobile device, the plaintext information to the second user on an interface in the first execution environment or on an interface in the advanced execution environment.

It should be noted that, in specific actual application, the foregoing corresponding steps may be combined or omitted. This is not limited herein.

The advanced execution environment includes a second execution environment and a third execution environment, the second execution environment is a trusted execution environment TEE, and the third execution environment is a security element execution environment SE.

The advanced execution environment includes a second execution environment and a third execution environment, and that the second mobile device determines, in the advanced execution environment, that the first biometric feature entered by the second user matches a second biometric feature pre-stored in the advanced execution environment includes:
determining, by the second mobile device, in the second execution environment, that the first biometric feature entered by the second user matches the second biometric feature pre-stored in the second execution environment; or
determining, by the second mobile device, in the third execution environment, that the first biometric feature entered by the second user matches the second biometric feature pre-stored in the second execution environment; or
separately determining, by the second mobile device, in the second execution environment and the third execution environment, that the first biometric feature entered by the second user matches the second biometric feature pre-stored in the second execution environment.

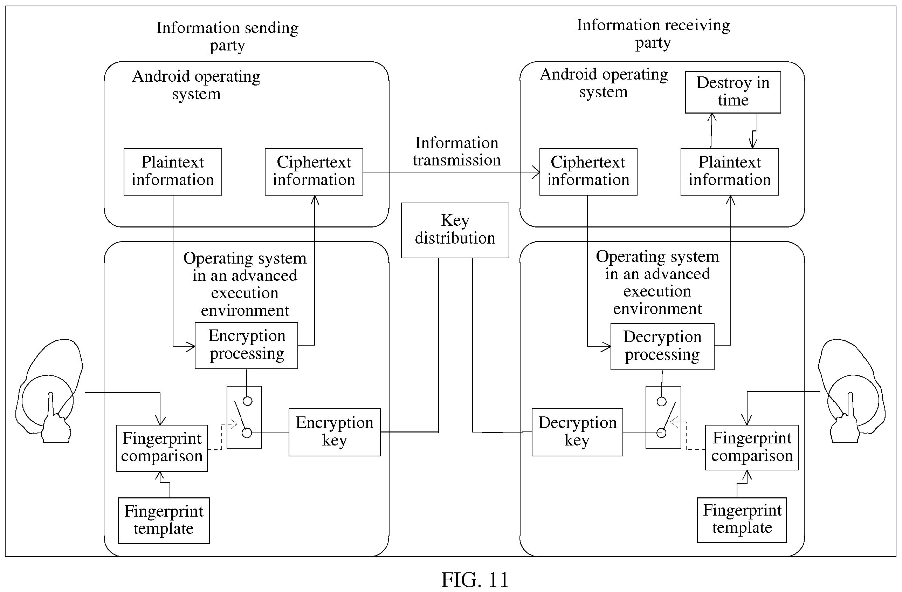

By combining the foregoing methods at the sending end and the receiving end, a specific and overall schematic diagram may be used to represent the foregoing methods at the sending end and the receiving end. Referring to FIG. 11, FIG. 11 is an overall flowchart of an implementation of an information transmission method according to the present invention. In FIG. 11, a first execution environment is an execution environment using an example in which a first operating system is Android, and a second execution environment is an execution environment using an example of a TEE. The process is simply described as follows. At a sending end, an Android OS sends a plaintext message to a secure OS. After fingerprint recognition of a user succeeds, an encryption key that has been distributed and is stored in a TEE environment is used to perform encryption processing. The secure OS then sends ciphertext information to the Android OS, and the Android OS sends the ciphertext information to a receiving end. At the receiving end, an Android OS receives the ciphertext message, and sends the ciphertext message to a secure OS. After fingerprint recognition of a user succeeds, a decryption key that has been distributed and is stored in a TEE environment is used to perform decryption processing. The secure OS then sends plaintext information to the Android OS for presentation and destroys the plaintext information in time.

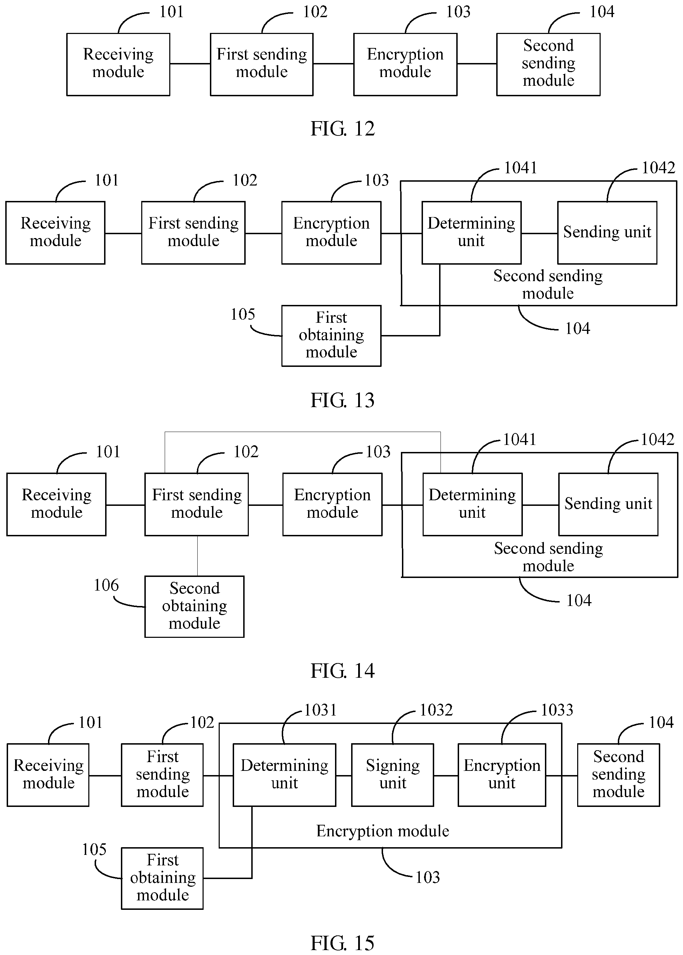

Referring to FIG. 12, FIG. 12 is a schematic structural diagram of an implementation of a mobile terminal according to the present invention. The mobile terminal in this implementation is a mobile terminal at a sending end, may be the foregoing first mobile device in actual application, and may perform the steps in the foregoing method at a sending end. Therefore, for related detailed content, refer to the foregoing description, and details are not described herein again.

The apparatus includes a receiving module 101, a first sending module 102, an encryption module 103, and a second sending module 104.

The receiving module 101 is configured to receive, in a first execution environment, plaintext information entered by a first user.

The first sending module 102 is configured to send the plaintext information to an advanced execution environment by using a predetermined communications interface, where a security and trust level of the advanced execution environment is higher than a security and trust level of the first execution environment.

The encryption module 103 is configured to perform, in the advanced execution environment, encryption processing on the plaintext information, to obtain ciphertext information.

The second sending module 104 is configured to send the ciphertext information to a second mobile device.

After receiving plaintext information of a user in a first execution environment, the apparatus in this implementation of the present invention performs encryption processing in an advanced execution environment, and then sends ciphertext information to a second mobile device. Because a security and trust level of the advanced execution environment is higher than a security and trust level of the first execution environment, during encryption, it is difficult for malware to enter the advanced execution environment to obtain the plaintext information and an encryption process, so that security of communications information can be improved. In addition, specially, an encryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

The advanced execution environment is a trusted execution environment TEE.

The apparatus further includes a presentation and confirmation module.

The presentation and confirmation module is configured to: present the plaintext information to the first user in the advanced execution environment by using an interface in the advanced execution environment, and receive confirmation of the first user for the plaintext information.

Referring to FIG. 13, the apparatus further includes a first obtaining module 105.

The first obtaining module 105 is configured to obtain, in the advanced execution environment, a first biometric feature entered by the first user.

In this case, the second sending module 104 includes a determining unit 1041 and a sending unit 1042.

The determining unit 1041 is configured to determine, in the advanced execution environment, that the first biometric feature entered by the first user matches a second biometric feature pre-stored in the advanced execution environment.

The sending unit 1042 is configured to send the ciphertext information to the second mobile device after the determining unit determines that the first biometric feature entered by the first user matches the second biometric feature pre-stored in the advanced execution environment.

Referring to FIG. 14, the apparatus further includes a second obtaining module 106.

The second obtaining module 106 is configured to obtain, in the first execution environment, a first biometric feature entered by the first user.

The first sending module 102 is further configured to send the first biometric feature to the advanced execution environment by using the predetermined communications interface.

In this case, the second sending module 104 includes a determining unit 1041 and a sending unit 1042.

The determining unit 1041 is configured to determine, in the advanced execution environment, that the first biometric feature entered by the first user matches a second biometric feature pre-stored in the advanced execution environment.

The sending unit 1042 is configured to send the ciphertext information to the second mobile device when the determining unit determines that the first biometric feature entered by the first user matches the second biometric feature pre-stored in the advanced execution environment.

Referring to FIG. 15, the apparatus further includes a first obtaining module 105.

The first obtaining module 105 is configured to obtain, in the advanced execution environment, a first biometric feature entered by the first user.

In this case, the encryption module 103 includes a determining unit 1031, a signing unit 1032, and an encryption unit 1033.

The determining unit 1031 is configured to determine, in the advanced execution environment, that the first biometric feature entered by the first user matches a second biometric feature pre-stored in the advanced execution environment.

The signing unit 1032 is configured to: when the determining unit determines that the first biometric feature entered by the first user matches the second biometric feature pre-stored in the advanced execution environment, sign the plaintext information by using a signature key, where the signature key is pre-stored in the advanced execution environment.

The encryption unit 1033 is configured to perform, in the advanced execution environment, encryption processing on the plaintext information and the signature, to obtain ciphertext information including the signature.

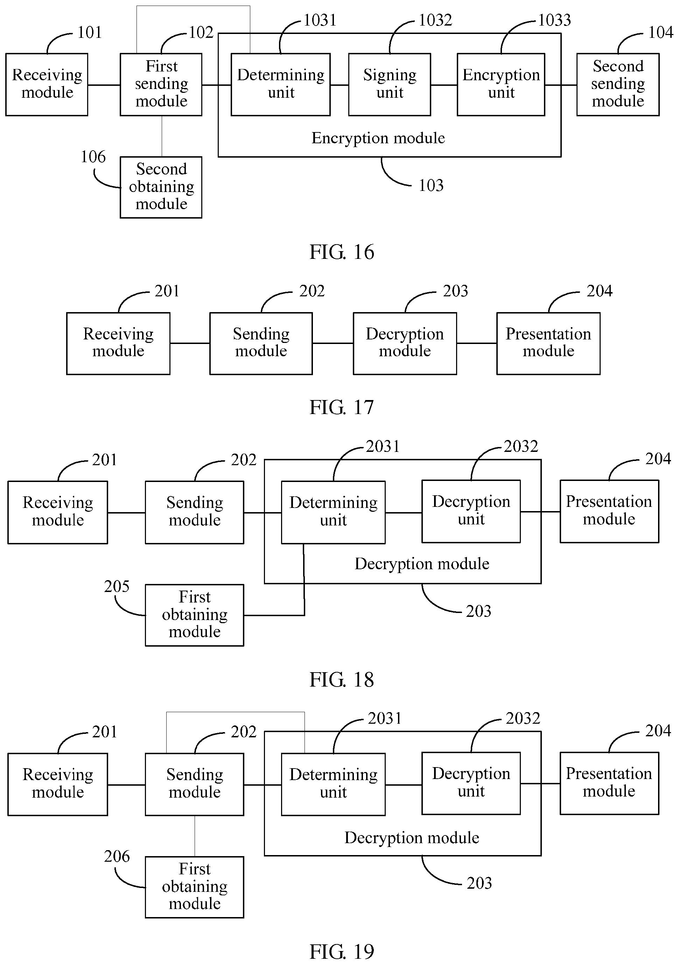

Referring to FIG. 16, the apparatus further includes a second obtaining module 106.

The second obtaining module 106 is configured to obtain, in the first execution environment, a first biometric feature entered by the first user.

In this case, the first sending module 102 is further configured to send the first biometric feature to the advanced execution environment by using the predetermined communications interface.

In this case, the encryption module 103 includes a determining unit 1031, a signing unit 1032, and an encryption unit 1033.

The determining unit 1031 is configured to determine, in the advanced execution environment, that the first biometric feature entered by the first user matches a second biometric feature pre-stored in the advanced execution environment.

The signing unit 1032 is configured to: when the determining unit determines that the first biometric feature entered by the first user matches the second biometric feature pre-stored in the advanced execution environment, sign the plaintext information by using a signature key, where the signature key is pre-stored in the advanced execution environment.

The encryption unit 1033 is configured to perform, in the advanced execution environment, encryption processing on the plaintext information and the signature, to obtain ciphertext information including the signature.

The apparatus further includes a storing module.

The storing module is configured to store the ciphertext information in a storage space in the advanced execution environment or store the ciphertext information in a first storage space, to make it convenient for the first user to view the ciphertext information.

The advanced execution environment includes a second execution environment and a third execution environment, the second execution environment is a trusted execution environment TEE, and the third execution environment is a security element execution environment SE.

The advanced execution environment includes a second execution environment and a third execution environment. The foregoing determining unit is specifically configured to: determine, in the second execution environment, that the first biometric feature entered by the first user matches the second biometric feature pre-stored in the second execution environment; or
determine, in the third execution environment, that the first biometric feature entered by the first user matches the second biometric feature pre-stored in the second execution environment; or
separately determine, in the second execution environment and the third execution environment, that the first biometric feature entered by the first user matches the second biometric feature pre-stored in the second execution environment.

Referring to FIG. 17, FIG. 17 is a schematic structural diagram of still another implementation of an information transmission apparatus of the present invention. The information transmission apparatus in this implementation is an information transmission apparatus at a receiving end, and may be the foregoing second mobile device in actual application, and may perform the steps in the foregoing method at a receiving end. Therefore, for related content, refer to the foregoing detailed description, and details are not described herein again.

The apparatus includes a receiving module 201, a sending module 202, a decryption module 203, and a presentation module 204.

The receiving module 201 is configured to receive, in a first execution environment, ciphertext information from a first mobile device.

The sending module 202 is configured to send the ciphertext information to an advanced execution environment by using a predetermined communications interface, where a security and trust level of the advanced execution environment is higher than a security and trust level of the first execution environment.

The decryption module 203 is configured to perform, in the advanced execution environment, decryption processing on the ciphertext information, to obtain plaintext information.

The presentation module 204 is configured to present the plaintext information to a second user.

The presentation module 204 is configured to destroy the plaintext information under a preset condition after presenting the plaintext information to the second user.

The apparatus in this implementation of the present invention receives ciphertext information in a first execution environment, performs decryption in an advanced execution environment, and presents plaintext information to a user after decryption, where the plaintext information is destroyed under a predetermined condition instead of being permanently stored. Because a security and trust level of the advanced execution environment is higher than a security and trust level of the first execution environment, during decryption, it is difficult for malware to enter the advanced execution environment to obtain a decryption process and the decrypted plaintext information, so that security of communications information can be improved. In addition, specially, a decryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

The advanced execution environment is a trusted execution environment TEE.

Referring to FIG. 18, the apparatus further includes a first obtaining module 205.

The first obtaining module 205 is configured to obtain, in the advanced execution environment, a first biometric feature entered by the second user.

In this case, the decryption module 203 includes a determining unit 2031 and a decryption unit 2033.

The determining unit 2031 is configured to determine, in the advanced execution environment, that the first biometric feature entered by the second user matches a second biometric feature pre-stored in the advanced execution environment.

The decryption unit 2033 is configured to perform decryption processing on the ciphertext information when the determining unit determines that the first biometric feature entered by the second user matches the second biometric feature pre-stored in the advanced execution environment, to obtain the plaintext information.

Referring to FIG. 19, the apparatus further includes a second obtaining module 206.

The second obtaining module 206 is configured to obtain, in the first execution environment, a first biometric feature entered by the second user.

In this case, the sending module 202 is further configured to send the first biometric feature to the advanced execution environment by using the predetermined communications interface.

In this case, the decryption module 203 includes a determining unit 2031 and a decryption unit 2032.

The determining unit 2031 is configured to determine, in the advanced execution environment, that the first biometric feature entered by the second user matches a second biometric feature pre-stored in the advanced execution environment.

The decryption unit 2032 is configured to perform decryption processing on the ciphertext information when the determining unit determines that the first biometric feature entered by the second user matches the second biometric feature pre-stored in the advanced execution environment, to obtain the plaintext information.

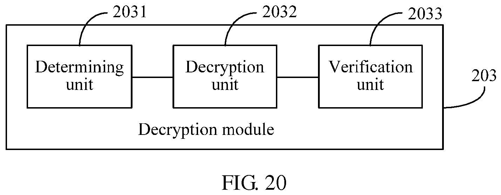

Referring to FIG. 20, when the ciphertext information is ciphertext information including a signature, the decryption module 203 includes a determining unit 2031, a decryption unit 2032, and a verification unit 2033.

The determining unit 2031 is configured to determine, in the advanced execution environment, that the first biometric feature entered by the second user matches a second biometric feature pre-stored in the advanced execution environment.

The decryption unit 2032 is configured to perform decryption processing on the ciphertext information when the determining unit determines that the first biometric feature entered by the second user matches the second biometric feature pre-stored in the advanced execution environment, to obtain the plaintext information and the signature.

The verification unit 2033 is configured to: verify, in the advanced execution environment, the signature by using a corresponding signature verification key, and determine that the verification succeeds, where the signature verification key is pre-stored in a storage space in the advanced execution environment.

The apparatus further includes a monitoring module and an execution module.

The monitoring module is configured to monitor in real time whether the first biometric feature entered by the second user is intermittent or disappears.

The execution module is configured to: when the first biometric feature entered by the second user is intermittent or disappears, stop the decryption processing, or stop presenting the plaintext information and destroy the plaintext information.

The presentation module 204 is specifically configured to present the plaintext information to the second user on an interface in the first execution environment or on an interface in the advanced execution environment.

The advanced execution environment includes a second execution environment and a third execution environment, the second execution environment is a trusted execution environment TEE, and the third execution environment is a security element execution environment SE.

The advanced execution environment includes a second execution environment and a third execution environment. The foregoing determining unit is specifically configured to: determine, in the second execution environment, that the first biometric feature entered by the second user matches the second biometric feature pre-stored in the second execution environment; or
determine, in the third execution environment, that the first biometric feature entered by the second user matches the second biometric feature pre-stored in the second execution environment; or
separately determine, in the second execution environment and the third execution environment, that the first biometric feature entered by the second user matches the second biometric feature pre-stored in the second execution environment.

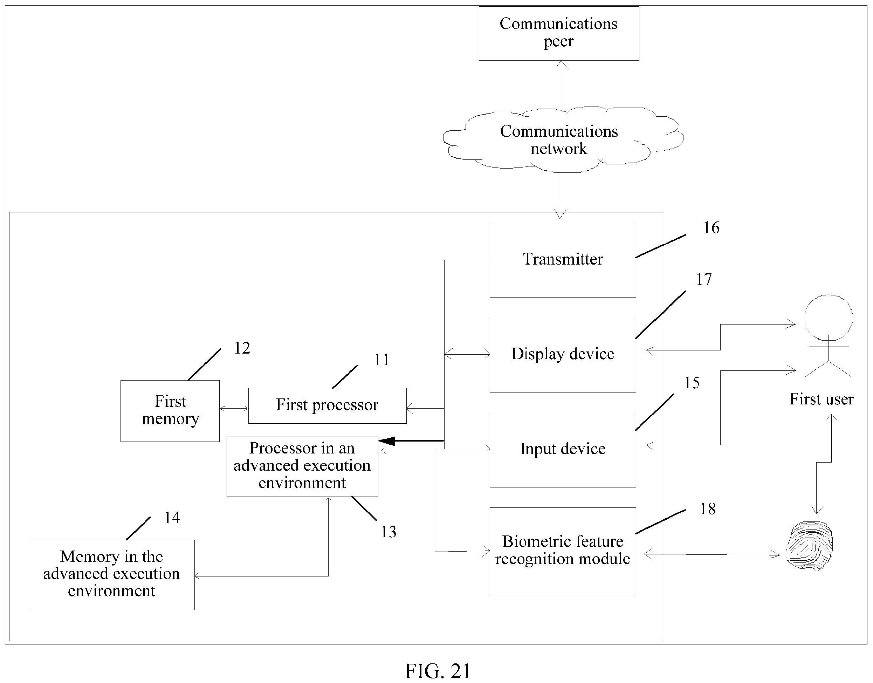

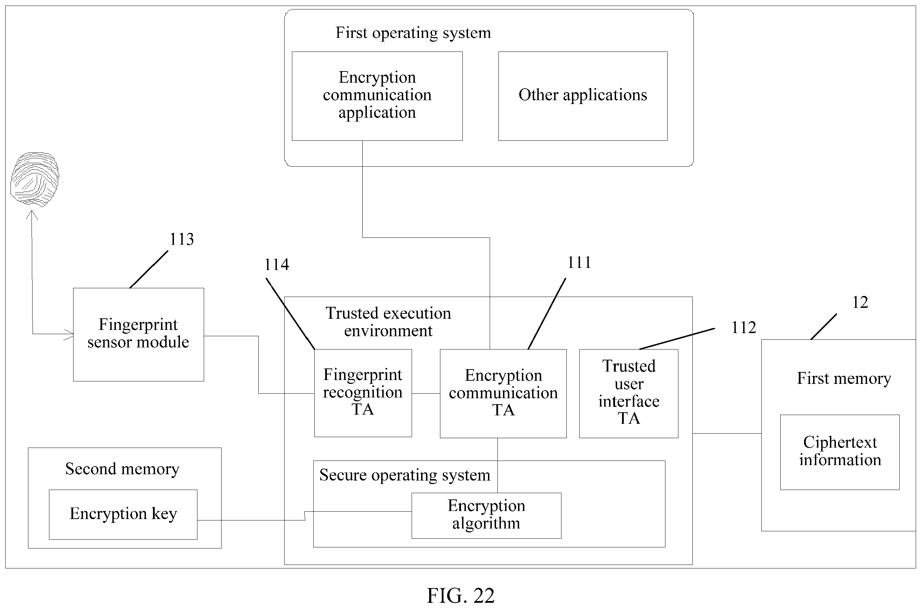

Referring to FIG. 21, FIG. 21 is a schematic diagram of a physical structure of an implementation of a mobile terminal according to the present invention. The mobile terminal in this implementation is a mobile terminal at a sending end, may be the foregoing first mobile device in actual application, and may perform the steps in the foregoing method at a sending end. Therefore, for related content, refer to the foregoing detailed description, and details are not described herein again. FIG. 22 is a schematic diagram of software and hardware modules included in a specific application in practice of the mobile terminal in FIG. 21.

The apparatus includes a first processor 11 and a first memory 12 in a first execution environment, a processor 13 in an advanced execution environment, a memory 14 in the advanced execution environment, an input device 15, and a transmitter 16.

It should be noted that, the first processor 11 and the processor 13 in the advanced execution environment may be physically separate or logically separate, and the first memory 12 and the memory 14 in the advanced execution environment may be physically separate or logically separate.

The input device 15 is configured to: receive, in the first execution environment, plaintext information entered by a first user, and send the plaintext information to the advanced execution environment by using a predetermined communications interface. A security and trust level of the advanced execution environment is higher than a security and trust level of the first execution environment. If the advanced execution environment is a second execution environment TEE, in actual application, the predetermined communications interface herein may be implemented by using encryption communication trusted application TA software 111 in the second execution environment.

The processor 13 of the advanced execution environment is configured to perform, in the advanced execution environment, encryption processing on the plaintext information, to obtain ciphertext information.

The transmitter 16 is configured to send the ciphertext information to a second mobile device.

After receiving plaintext information of a user in a first execution environment, the apparatus in this implementation of the present invention performs encryption processing in an advanced execution environment, and then sends ciphertext information to a second mobile device. Because a security and trust level of the advanced execution environment is higher than a security and trust level of the first execution environment, during encryption, it is difficult for malware to enter the advanced execution environment to obtain the plaintext information and an encryption process, so that security of communications information can be improved. In addition, specially, an encryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

The advanced execution environment is a trusted execution environment TEE.

The apparatus further includes a display device 17.

The display device 17 is configured to present the plaintext information to the first user in the advanced execution environment by using an interface in the advanced execution environment, and the input device 15 is further configured to receive confirmation of the first user for the plaintext information. In actual application, the interface in the advanced execution environment herein may be implemented by using trusted user interface trusted application software 112 in the trusted execution environment.

The apparatus further includes a biometric feature recognition module 18.

The biometric feature recognition module 18 is configured to obtain, in the advanced execution environment or the first execution environment, a first biometric feature entered by the first user. When the first biometric feature is obtained in the first execution environment, the first biometric feature further needs to be sent to the advanced execution environment by using the predetermined communications interface.

The memory 14 of the advanced execution environment is configured to pre-store a second biometric feature in the advanced execution environment, or store a second biometric feature and a signature key in the advanced execution environment.

The processor 13 in the advanced execution environment is further configured to: determine, in the advanced execution environment, that the first biometric feature matches the second biometric feature pre-stored in the memory in the advanced execution environment, and control, after determining that the first biometric feature entered by the first user matches the second biometric feature pre-stored in the memory in the advanced execution environment, the transmitter 16 to send the ciphertext information to the second mobile device.

The biometric feature recognition module 18 is a fingerprint recognition module. In actual application, the fingerprint recognition module herein may be implemented by using a fingerprint sensor module 113 and fingerprint recognition trusted application software 114 in the second execution environment TEE.

The processor 13 of the advanced execution environment is further configured to: determine, in the advanced execution environment, that the first biometric feature entered by the first user matches the second biometric feature pre-stored in the memory 14 in the advanced execution environment; when determining that the first biometric feature entered by the first user matches the second biometric feature pre-stored in the memory 14 in the advanced execution environment, sign the plaintext information by using the signature key, where the signature key is pre-stored in the memory 14 in the advanced execution environment; and perform encryption processing on the plaintext information and the signature, to obtain ciphertext information including the signature.

The memory 13 of the advanced execution environment is further configured to store the ciphertext information in the advanced execution environment, or store the ciphertext information in the first memory 12, to make it convenient for the first user to view the ciphertext information.

The advanced execution environment includes a second execution environment and a third execution environment, the second execution environment is a trusted execution environment TEE, and the third execution environment is a security element execution environment SE.

The advanced execution environment includes a second execution environment and a third execution environment. In this case, the processor 13 of the advanced execution environment is specifically configured to: determine, in the second execution environment, that the first biometric feature entered by the first user matches the second biometric feature pre-stored in the memory 14 in the second execution environment; or determine, in the third execution environment, that the first biometric feature entered by the first user matches the second biometric feature pre-stored in the memory 14 in the second execution environment; or separately determine, in the second execution environment and the third execution environment, that the first biometric feature entered by the first user matches the second biometric feature pre-stored in the memory 14 in the second execution environment.

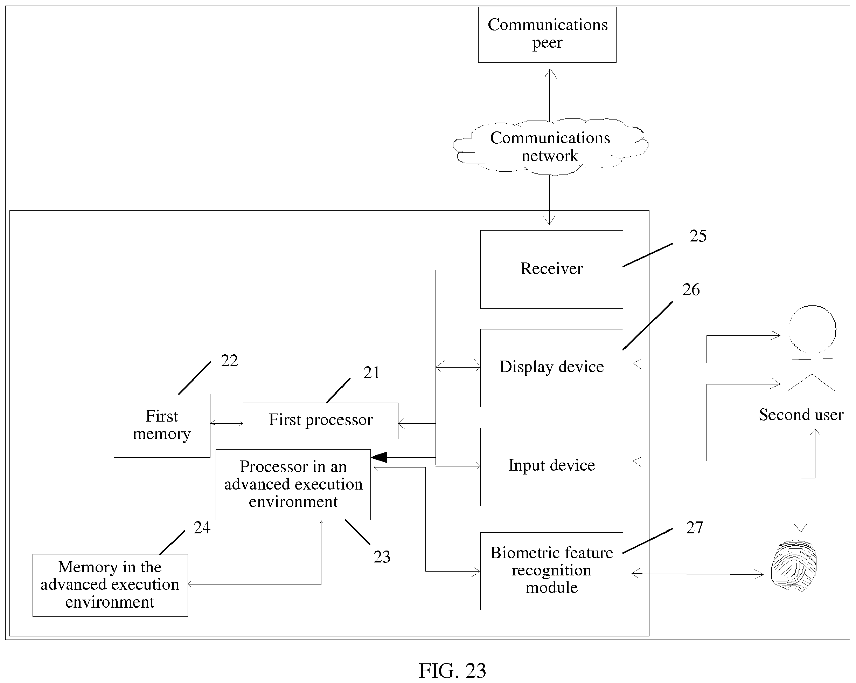

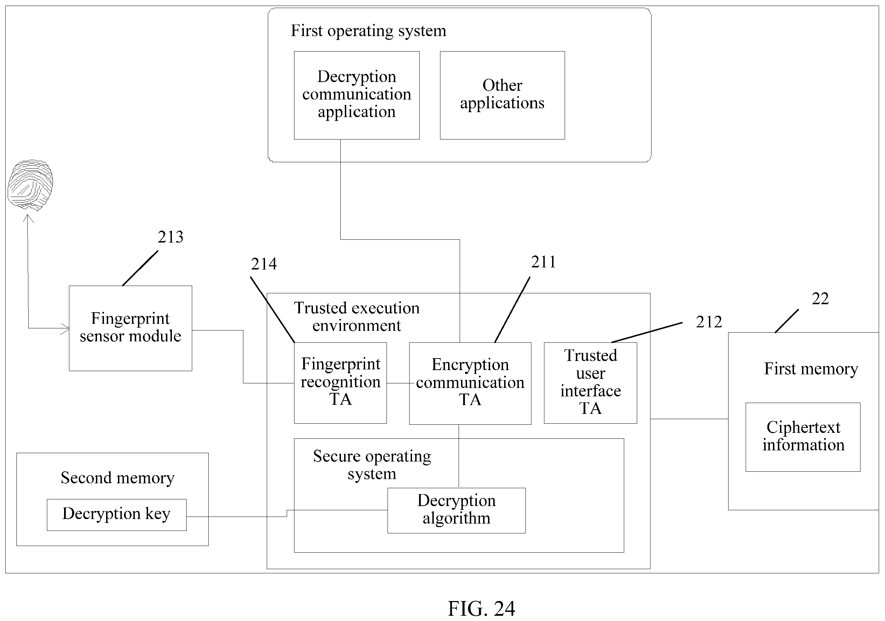

Referring to FIG. 23, FIG. 23 is a schematic diagram of a physical structure of another implementation of a mobile terminal according to the present invention. The mobile terminal in this implementation is a mobile terminal at a receiving end, may be the foregoing second mobile device in actual application, and may perform the steps in the foregoing method at a receiving end. Therefore, for related content, refer to the foregoing detailed description, and details are not described herein again. FIG. 24 is a schematic diagram of software and hardware modules included in a specific application in practice of the mobile terminal in FIG. 23.

The apparatus further includes a first processor 21 and a first memory 22 in a first execution environment, a processor 23 in an advanced execution environment, a memory 24 in the advanced execution environment, a receiver 25, and a display device 26.

It should be noted that, the first processor 21 and the processor 23 in the advanced execution environment may be physically separate or logically separate, and the first memory 22 and the memory 24 in the advanced execution environment may be physically separate or logically separate.

The receiver 25 is configured to: receive, in the first execution environment, ciphertext information from a first mobile device, and send the ciphertext information to the advanced execution environment by using a predetermined communications interface. A security and trust level of the advanced execution environment is higher than a security and trust level of the first execution environment. In actual application, the predetermined communications interface herein may be implemented by using encryption communication trusted application TA software 211 in a second execution environment TEE.

The processor 23 in the advanced execution environment is configured to perform, in the advanced execution environment, decryption processing on the ciphertext information, to obtain plaintext information.

The display device 26 is configured to present the plaintext information to a second user. The plaintext information is destroyed under a preset condition after the plaintext information is presented to the second user.

The apparatus in this implementation of the present invention receives ciphertext information in a first execution environment, performs decryption in an advanced execution environment, and then presents plaintext information to a user, where the plaintext information is destroyed under a predetermined condition instead of being permanently stored. Because a security and trust level of the advanced execution environment is higher than a security and trust level of the first execution environment, during decryption, it is difficult for malware to enter the advanced execution environment to obtain a decryption process and the decrypted plaintext information, so that security of communications information can be improved. In addition, specially, a decryption key used in this implementation of the present invention is not limited to collected biometric feature data (for example, fingerprint data) of a user. Therefore, selectable key generation algorithms have a wider range and are subject to fewer limitations, so that a key generation algorithm with security approved in the industry can be used, thereby ensuring overall security of a system.

The advanced execution environment is a trusted execution environment TEE.

The apparatus further includes a biometric feature recognition module 27.

The biometric feature recognition module 27 is configured to obtain, in the advanced execution environment or in the first execution environment, a first biometric feature entered by the second user. When the first biometric feature is obtained in the first execution environment, the first biometric feature further needs to be sent to the advanced execution environment by using the predetermined communications interface.

The memory 24 in the advanced execution environment is configured to pre-store a second biometric feature in the advanced execution environment, or store a second biometric feature and a signature key in the advanced execution environment.

The processor 23 in the advanced execution environment is further configured to: determine, in the advanced execution environment, that the first biometric feature matches the second biometric feature pre-stored in the memory 24 in the advanced execution environment, and perform decryption processing on the ciphertext information when determining that the first biometric feature entered by the second user matches the second biometric feature pre-stored in the memory 24 in the advanced execution environment, to obtain the plaintext information.

The biometric feature recognition module 27 is a fingerprint recognition module. In actual application, the fingerprint recognition module herein may be implemented by using a fingerprint sensor module 213 and fingerprint recognition trusted application software 214 in the second execution environment TEE.

The ciphertext information is ciphertext information including a signature. In this case, the processor 23 in the advanced execution environment is further configured to: perform decryption processing on the ciphertext information when determining that the first biometric feature entered by the second user matches the second biometric feature pre-stored in the memory 24 in the advanced execution environment, to obtain the plaintext information and the signature; and verify the signature by using a corresponding signature verification key, and determine that the verification succeeds, where the signature verification key is pre-stored in the memory 24 in the advanced execution environment.

The biometric feature recognition module 27 is further configured to: monitor in real time whether the first biometric feature entered by the second user is intermittent or disappears; and when the first biometric feature entered by the second user is intermittent or disappears, send information to the processor 23 in the advanced execution environment, so that the processor 23 in the advanced execution environment stops the decryption processing, or send information to the display device 26, so that the display device 26 stops presenting the plaintext information and destroys the plaintext information.

The display device 26 is further configured to present the plaintext information to the second user on an interface in the first execution environment or on an interface in the advanced execution environment. In actual application, the interface in the advanced execution environment herein may be implemented by using trusted user interface trusted application software 212 in the second execution environment TEE.

The advanced execution environment includes a second execution environment and a third execution environment, the second execution environment is a trusted execution environment TEE, and the third execution environment is a security element execution environment SE.

The advanced execution environment includes a second execution environment and a third execution environment. In this case, the processor 23 in the advanced execution environment is specifically configured to: determine, in the second execution environment, that the first biometric feature entered by the second user matches the second biometric feature pre-stored in the memory 24 in the second execution environment; or determine, in the third execution environment, that the first biometric feature entered by the second user matches the second biometric feature pre-stored in the memory 24 in the second execution environment; or separately determine, in the second execution environment and the third execution environment, that the first biometric feature entered by the second user matches the second biometric feature pre-stored in the memory 24 in the second execution environment.

It should be noted that, the foregoing method at a sending end and the method at a receiving end may be performed on a same mobile device. That is, a same mobile device may be used as a sending end to participate in the method at a sending end to send first ciphertext information, or may be used as a receiving end to participate in the method at a receiving end to receive another piece of ciphertext information.

In the several embodiments provided in the present invention, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely embodiments of the present invention, and are not intended to limit the scope of the present invention. An equivalent structural or equivalent process alternation made by using the content of the specification and drawings of the present invention, or an application of the content of the specification and drawings directly or indirectly to another related technical field, shall fall within the protection scope of the present invention as defined by the appended claims.

## Claims

1. An information transmission method, wherein the method comprises:
receiving (S101), by a first mobile device, in a first execution environment, plaintext information entered by a first user, and sending the plaintext information to an advanced execution environment by using a predetermined communications interface, wherein a security and trust level of the advanced execution environment is higher than a security and trust level of the first execution environment;
performing (S102), by the first mobile device, in the advanced execution environment, encryption processing on the plaintext information, to obtain ciphertext information; and
sending (S103), by the first mobile device, the ciphertext information to a second mobile device;
wherein, after the sending, by the first mobile device, the ciphertext information to the second mobile device, when the first user requests to view the ciphertext information, the method further comprises:
monitoring in real time, by the first mobile device, whether a fingerprint presented by the first user on a fingerprint sensor is recognized; and
if the fingerprint of the first user leaves the fingerprint sensor or the fingerprint recognition fails, stopping a decryption processing, and stopping presenting the plaintext information and destroying the plaintext information.

2. The method according to claim 1, wherein before the sending, by the first mobile device, the ciphertext information to the second mobile device, the method further comprises:
obtaining, by the first mobile device, in the advanced execution environment, a first biometric feature entered by the first user; and
the sending, by the first mobile device, the ciphertext information to the second mobile device comprises:
sending the ciphertext information to the second mobile device when the first mobile device determines, in the advanced execution environment, that the first biometric feature entered by the first user matches a second biometric feature pre-stored in the advanced execution environment.

3. The method according to claim 1, wherein before the sending, by the first mobile device, the ciphertext information to the second mobile device, the method further comprises:
obtaining, by the first mobile device, in the first execution environment, a first biometric feature entered by the first user; and
sending, by the first mobile device, the first biometric feature to the advanced execution environment by using the predetermined communications interface; and
the sending, by the first mobile device, the ciphertext information to a second mobile device comprises:
sending the ciphertext information to the second mobile device when the first mobile device determines, in the advanced execution environment, that the first biometric feature entered by the first user matches a second biometric feature pre-stored in the advanced execution environment.

4. The method according to claim 1, wherein before the performing, by the first mobile device, in the advanced execution environment, encryption processing on the plaintext information, to obtain ciphertext information, the method further comprises:
obtaining, by the first mobile device, in the advanced execution environment, a first biometric feature entered by the first user; and
the performing, by the first mobile device, in the advanced execution environment, encryption processing on the plaintext information, to obtain ciphertext information comprises:
when the first mobile device determines, in the advanced execution environment, that the first biometric feature entered by the first user matches a second biometric feature pre-stored in the advanced execution environment, signing the plaintext information by using a signature key, wherein the signature key is pre-stored in the advanced execution environment; and
performing, by the first mobile device, in the advanced execution environment, encryption processing on the plaintext information and the signature, to obtain ciphertext information comprising the signature.

5. The method according to claim 1, wherein before the performing, by the first mobile device, in the advanced execution environment, encryption processing on the plaintext information, to obtain ciphertext information, the method further comprises:
obtaining, by the first mobile device, in the first execution environment, a first biometric feature entered by the first user; and
sending, by the first mobile device, the first biometric feature to the advanced execution environment by using the predetermined communications interface; and
the performing, by the first mobile device, in the advanced execution environment, encryption processing on the plaintext information, to obtain ciphertext information comprises:
when the first mobile device determines, in the advanced execution environment, that the first biometric feature entered by the first user matches a second biometric feature pre-stored in the advanced execution environment, signing the plaintext information by using a signature key, wherein the signature key is pre-stored in the advanced execution environment; and
performing, by the first mobile device, in the advanced execution environment, encryption processing on the plaintext information and the signature, to obtain ciphertext information comprising the signature.

6. An information transmission method, wherein the method comprises:
receiving (S201), by a second mobile device, in a first execution environment, ciphertext information from a first mobile device, and sending the ciphertext information to an advanced execution environment by using a predetermined communications interface, wherein a security and trust level of the advanced execution environment is higher than a security and trust level of the first execution environment;
performing (S202), by the second mobile device, in the advanced execution environment, decryption processing on the ciphertext information, to obtain plaintext information; and
presenting (S203), by the second mobile device, the plaintext information to a second user;
wherein the method further comprises:
monitoring in real time, by the second mobile device, whether a first biometric feature entered by the second user is intermittent or disappears; and
if the first biometric feature entered by the second user is intermittent or disappears, stopping the decryption processing, or stopping presenting the plaintext information and destroying the plaintext information.

7. The method according to claim 6, wherein before the performing, by the second mobile device, in the advanced execution environment, decryption processing on the ciphertext information, to obtain plaintext information, the method further comprises:
obtaining, by the second mobile device, in the advanced execution environment, the first biometric feature entered by the second user; and
the performing, by the second mobile device, in the advanced execution environment, decryption processing on the ciphertext information, to obtain plaintext information comprises:
performing decryption processing on the ciphertext information when the second mobile device determines, in the advanced execution environment, that the first biometric feature entered by the second user matches a second biometric feature pre-stored in the advanced execution environment, to obtain the plaintext information.

8. The method according to claim 6, wherein before the performing, by the second mobile device, in the advanced execution environment, decryption processing on the ciphertext information, to obtain plaintext information, the method further comprises:
obtaining, by the second mobile device, in the first execution environment, the first biometric feature entered by the second user; and
sending, by the second mobile device, the first biometric feature to the advanced execution environment by using the predetermined communications interface; and
the performing, by the second mobile device, in the advanced execution environment, decryption processing on the ciphertext information, to obtain plaintext information comprises:
performing decryption processing on the ciphertext information when the second mobile device determines, in the advanced execution environment, that the first biometric feature entered by the second user matches a second biometric feature pre-stored in the advanced execution environment, to obtain the plaintext information.

9. The method according to claim 7 or 8, wherein the ciphertext information is ciphertext information comprising a signature; and
the performing decryption processing on the ciphertext information when the second mobile device determines, in the advanced execution environment, that the first biometric feature entered by the second user matches a second biometric feature pre-stored in the advanced execution environment, to obtain the plaintext information comprises:
performing decryption processing on the ciphertext information when the second mobile device determines, in the advanced execution environment, that the first biometric feature entered by the second user matches the second biometric feature pre-stored in the advanced execution environment, to obtain the plaintext information and the signature; and
verifying, by the second mobile device, in the advanced execution environment, the signature by using a corresponding signature verification key, and determining that the verification succeeds, wherein the signature verification key is pre-stored in the advanced execution environment.

10. A first mobile device, wherein the first mobile device comprises a receiving module (101), a first sending module (102), an encryption module (103), and a second sending module (104), wherein
the receiving module is configured to receive, in a first execution environment, plaintext information entered by a first user;
the first sending module is configured to send the plaintext information to an advanced execution environment by using a predetermined communications interface, wherein a security and trust level of the advanced execution environment is higher than a security and trust level of the first execution environment;
the encryption module is configured to perform, in the advanced execution environment, encryption processing on the plaintext information, to obtain ciphertext information; and
the second sending module is configured to send the ciphertext information to a second mobile device;
wherein, after the sending, by the first mobile device, the ciphertext information to the second mobile device, when the first user requests to view the ciphertext information, the first mobile device is further configured for:
monitoring in real time, by the first mobile device, whether a first biometric feature entered by the first user is intermittent or disappears; and
if the first biometric feature entered by the first user is intermittent or disappears, stopping a decryption processing, and stopping presenting the plaintext information and destroying the plaintext information.

11. The first mobile device according to claim 10, wherein the advanced execution environment is a trusted execution environment TEE.

12. The first mobile device according to claim 10 or 11, wherein the advanced execution environment comprises a second execution environment and a third execution environment, the second execution environment is a trusted execution environment TEE, and the third execution environment is a security element execution environment SE.

13. A second mobile device, wherein the second mobile device comprises a receiving module (201), a sending module (202), a decryption module (203), and a presentation module (204), wherein
the receiving module is configured to receive, in a first execution environment, ciphertext information from a first mobile device;
the sending module is configured to send the ciphertext information to an advanced execution environment by using a predetermined communications interface, wherein a security and trust level of the advanced execution environment is higher than a security and trust level of the first execution environment;
the decryption module is configured to perform, in the advanced execution environment, decryption processing on the ciphertext information, to obtain plaintext information; and
the presentation module is configured to present the plaintext information to a second user;
wherein the second mobile device is further configured for:
monitoring in real time, by the second mobile device, whether a first biometric feature entered by the second user is intermittent or disappears; and
if the first biometric feature entered by the second user is intermittent or disappears, stopping the decryption processing, or stopping presenting the plaintext information and destroying the plaintext information.

14. The second mobile device according to claim 13, wherein the advanced execution environment comprises a second execution environment and a third execution environment; and
the determining unit is specifically configured to: determine, in the second execution environment, that the first biometric feature entered by the second user matches the second biometric feature pre-stored in the second execution environment; or
determine, in the third execution environment, that the first biometric feature entered by the second user matches the second biometric feature pre-stored in the second execution environment; or
separately determine, in the second execution environment and the third execution environment, that the first biometric feature entered by the second user matches the second biometric feature pre-stored in the second execution environment.

## Patentansprüche

1. Informationsübertragungsverfahren, wobei das Verfahren Folgendes umfasst:
Empfangen (S101), durch ein erstes Mobilgerät, in einer ersten Ausführungsumgebung, von Klartextinformationen, die durch einen ersten Benutzer eingegeben werden, und Senden der Klartextinformationen an eine erweiterte Ausführungsumgebung unter Verwendung einer vorbestimmten Kommunikationsschnittstelle, wobei eine Sicherheits- und Vertrauensstufe der erweiterten Ausführungsumgebung höher ist als eine Sicherheits- und Vertrauensstufe der ersten Ausführungsumgebung; Durchführen (S102), durch das erste Mobilgerät, in der erweiterten Ausführungsumgebung, einer Verschlüsselungsverarbeitung an den Klartextinformationen, um Chiffretextinformationen zu erhalten; und
Senden (S103), durch das erste Mobilgerät, der Chiffretextinformationen an ein zweites Mobilgerät;
wobei nach dem Senden, durch das erste Mobilgerät, der Chiffretextinformationen an das zweite Mobilgerät, wenn der erste Benutzer anfordert, die Chiffretextinformationen anzusehen, das Verfahren ferner Folgendes umfasst:
Überwachen in Echtzeit, durch das erste Mobilgerät, ob ein durch den ersten Benutzer auf einem Fingerabdrucksensor präsentierter Fingerabdruck erkannt wird; und
wenn der Fingerabdruck des ersten Benutzers den Fingerabdrucksensor verlässt oder die Fingerabdruckerkennung fehlschlägt, Stoppen einer Entschlüsselungsverarbeitung und Stoppen eines Präsentierens der Klartextinformationen und Vernichten der Klartextinformationen.

2. Verfahren nach Anspruch 1, wobei vor dem Senden, durch das erste Mobilgerät, der Chiffretextinformationen an das zweite Mobilgerät, das Verfahren ferner Folgendes umfasst:
Erhalten, durch das erste Mobilgerät, in der erweiterten Ausführungsumgebung, eines ersten biometrischen Merkmals, das durch den ersten Benutzer eingegeben wird; und
wobei das Senden, durch das erste Mobilgerät, der Chiffretextinformationen an das zweite Mobilgerät Folgendes umfasst:
Senden der Chiffretextinformationen an das zweite Mobilgerät, wenn das erste Mobilgerät in der erweiterten Ausführungsumgebung bestimmt, dass das vom ersten Benutzer eingegebene erste biometrische Merkmal mit einem in der erweiterten Ausführungsumgebung vorgespeicherten zweiten biometrischen Merkmal übereinstimmt.

3. Verfahren nach Anspruch 1, wobei vor dem Senden, durch das erste Mobilgerät, der Chiffretextinformationen an das zweite Mobilgerät, das Verfahren ferner Folgendes umfasst:
Erhalten, durch das erste Mobilgerät, in der ersten Ausführungsumgebung, eines ersten biometrischen Merkmals, das durch den ersten Benutzer eingegeben wird; und
Senden, durch das erste Mobilgerät, des ersten biometrischen Merkmals an die erweiterte Ausführungsumgebung unter Verwendung der vorbestimmten Kommunikationsschnittstelle; und
wobei das Senden, durch das erste Mobilgerät, der Chiffretextinformationen an ein zweites Mobilgerät Folgendes umfasst:
Senden der Chiffretextinformationen an das zweite Mobilgerät, wenn das erste Mobilgerät in der erweiterten Ausführungsumgebung bestimmt, dass das vom ersten Benutzer eingegebene erste biometrische Merkmal mit einem in der erweiterten Ausführungsumgebung vorgespeicherten zweiten biometrischen Merkmal übereinstimmt.

4. Verfahren nach Anspruch 1, wobei vor dem Durchführen, durch das erste Mobilgerät, in der erweiterten Ausführungsumgebung, der Verschlüsselungsverarbeitung an den Klartextinformationen, um Chiffretextinformationen zu erhalten, das Verfahren ferner Folgendes umfasst:
Erhalten, durch das erste Mobilgerät, in der erweiterten Ausführungsumgebung, eines ersten biometrischen Merkmals, das durch den ersten Benutzer eingegeben wird; und
wobei das Durchführen, durch das erste Mobilgerät, in der erweiterten Ausführungsumgebung, der Verschlüsselungsverarbeitung an den Klartextinformationen, um Chiffretextinformationen zu erhalten, Folgendes umfasst:
wenn das erste Mobilgerät in der erweiterten Ausführungsumgebung bestimmt, dass das vom ersten Benutzer eingegebene erste biometrische Merkmal mit einem in der erweiterten Ausführungsumgebung vorgespeicherten zweiten biometrischen Merkmal übereinstimmt, Signieren der Klartextinformationen unter Verwendung eines Signaturschlüssels, wobei der Signaturschlüssel in der erweiterten Ausführungsumgebung vorgespeichert ist; und
Durchführen, durch das erste Mobilgerät, in der erweiterten Ausführungsumgebung, einer Verschlüsselungsverarbeitung an den Klartextinformationen und der Signatur, um Chiffretextinformationen zu erhalten, die die Signatur umfassen.

5. Verfahren nach Anspruch 1, wobei vor dem Durchführen, durch das erste Mobilgerät, in der erweiterten Ausführungsumgebung, der Verschlüsselungsverarbeitung an den Klartextinformationen, um Chiffretextinformationen zu erhalten, das Verfahren ferner Folgendes umfasst:
Erhalten, durch das erste Mobilgerät, in der ersten Ausführungsumgebung, eines ersten biometrischen Merkmals, das durch den ersten Benutzer eingegeben wird; und
Senden, durch das erste Mobilgerät, des ersten biometrischen Merkmals an die erweiterte Ausführungsumgebung unter Verwendung der vorbestimmten Kommunikationsschnittstelle; und
wobei das Durchführen, durch das erste Mobilgerät, in der erweiterten Ausführungsumgebung, der Verschlüsselungsverarbeitung an den Klartextinformationen, um Chiffretextinformationen zu erhalten, Folgendes umfasst:
wenn das erste Mobilgerät in der erweiterten Ausführungsumgebung bestimmt, dass das vom ersten Benutzer eingegebene erste biometrische Merkmal mit einem in der erweiterten Ausführungsumgebung vorgespeicherten zweiten biometrischen Merkmal übereinstimmt, Signieren der Klartextinformationen unter Verwendung eines Signaturschlüssels, wobei der Signaturschlüssel in der erweiterten Ausführungsumgebung vorgespeichert ist; und
Durchführen, durch das erste Mobilgerät, in der erweiterten Ausführungsumgebung, einer Verschlüsselungsverarbeitung an den Klartextinformationen und der Signatur, um Chiffretextinformationen zu erhalten, die die Signatur umfassen.

6. Informationsübertragungsverfahren, wobei das Verfahren Folgendes umfasst:
Empfangen (S201), durch ein zweites Mobilgerät, in einer ersten Ausführungsumgebung, von Chiffretextinformationen von einem ersten Mobilgerät, und Senden der Chiffretextinformationen an eine erweiterte Ausführungsumgebung unter Verwendung einer vorbestimmten Kommunikationsschnittstelle, wobei eine Sicherheits- und Vertrauensstufe der erweiterten Ausführungsumgebung höher ist als eine Sicherheits- und Vertrauensstufe der ersten Ausführungsumgebung;
Durchführen (S202), durch das zweite Mobilgerät, in der erweiterten Ausführungsumgebung, einer Entschlüsselungsverarbeitung an den Chiffretextinformationen, um Klartextinformationen zu erhalten; und
Präsentieren (S203), durch das zweite Mobilgerät, der Klartextinformationen an einen zweiten Benutzer;
wobei das Verfahren ferner Folgendes umfasst:
Überwachen in Echtzeit, durch das zweite Mobilgerät, ob ein erstes biometrisches Merkmal, das durch den zweiten Benutzer eingegeben wird, intermittierend ist oder verschwindet; und
wenn das erste biometrische Merkmal, das durch den zweiten Benutzer eingegeben wird, intermittierend ist oder verschwindet, Stoppen der Entschlüsselungsverarbeitung oder Stoppen des Präsentierens der Klartextinformationen und Vernichten der Klartextinformationen.

7. Verfahren nach Anspruch 6, wobei vor dem Durchführen, durch das zweite Mobilgerät, in der erweiterten Ausführungsumgebung, der Entschlüsselungsverarbeitung an den Chiffretextinformationen, um Klartextinformationen zu erhalten, das Verfahren ferner Folgendes umfasst:
Erhalten, durch das zweite Mobilgerät, in der erweiterten Ausführungsumgebung, des ersten biometrischen Merkmals, das durch den zweiten Benutzer eingegeben wird; und
wobei das Durchführen, durch das zweite Mobilgerät, in der erweiterten Ausführungsumgebung, der Entschlüsselungsverarbeitung an den Chiffretextinformationen, um Klartextinformationen zu erhalten, Folgendes umfasst:
Durchführen einer Entschlüsselungsverarbeitung an den Chiffretextinformationen, wenn das zweite Mobilgerät in der erweiterten Ausführungsumgebung bestimmt, dass das durch den zweiten Benutzer eingegebene erste biometrische Merkmal mit einem in der erweiterten Ausführungsumgebung vorgespeicherten zweiten biometrischen Merkmal übereinstimmt, um die Klartextinformationen zu erhalten.

8. Verfahren nach Anspruch 6, wobei vor dem Durchführen, durch das zweite Mobilgerät, in der erweiterten Ausführungsumgebung, der Entschlüsselungsverarbeitung an den Chiffretextinformationen, um Klartextinformationen zu erhalten, das Verfahren ferner Folgendes umfasst:
Erhalten, durch das zweite Mobilgerät, in der ersten Ausführungsumgebung, des ersten biometrischen Merkmals, das durch den zweiten Benutzer eingegeben wird; und Senden, durch das zweite Mobilgerät, des ersten biometrischen Merkmals an die erweiterte Ausführungsumgebung unter Verwendung der vorbestimmten Kommunikationsschnittstelle; und
wobei das Durchführen, durch das zweite Mobilgerät, in der erweiterten Ausführungsumgebung, der Entschlüsselungsverarbeitung an den Chiffretextinformationen, um Klartextinformationen zu erhalten, Folgendes umfasst: Durchführen einer Entschlüsselungsverarbeitung an den Chiffretextinformationen, wenn das zweite Mobilgerät in der erweiterten Ausführungsumgebung bestimmt, dass das durch den zweiten Benutzer eingegebene erste biometrische Merkmal mit einem in der erweiterten Ausführungsumgebung vorgespeicherten zweiten biometrischen Merkmal übereinstimmt, um die Klartextinformationen zu erhalten.

9. Verfahren nach Anspruch 7 oder 8, wobei die Chiffretextinformationen Chiffretextinformationen sind, die eine Signatur umfassen; und wobei das Durchführen der Entschlüsselungsverarbeitung an den Chiffretextinformationen, wenn das zweite Mobilgerät in der erweiterten Ausführungsumgebung bestimmt, dass das durch den zweiten Benutzer eingegebene erste biometrische Merkmal mit einem in der erweiterten Ausführungsumgebung vorgespeicherten zweiten biometrischen Merkmal übereinstimmt, um die Klartextinformationen zu erhalten, Folgendes umfasst:
Durchführen einer Entschlüsselungsverarbeitung an den Chiffretextinformationen, wenn das zweite Mobilgerät in der erweiterten Ausführungsumgebung bestimmt, dass das durch den zweiten Benutzer eingegebene erste biometrische Merkmal mit dem in der erweiterten Ausführungsumgebung vorgespeicherten zweiten biometrischen Merkmal übereinstimmt, um die Klartextinformationen und die Signatur zu erhalten; und Verifizieren, durch das zweite Mobilgerät, in der erweiterten Ausführungsumgebung, der Signatur unter Verwendung eines entsprechenden Signaturverifizierungsschlüssels, und Bestimmen, dass die Verifizierung erfolgreich ist, wobei der Signaturverifizierungsschlüssel in der erweiterten Ausführungsumgebung vorgespeichert ist.

10. Erstes Mobilgerät, wobei das erste Mobilgerät ein Empfangsmodul (101), ein erstes Sendemodul (102), ein Verschlüsselungsmodul (103) und ein zweites Sendemodul (104) umfasst, wobei das Empfangsmodul konfiguriert ist, um in einer ersten Ausführungsumgebung Klartextinformationen zu empfangen, die durch einen ersten Benutzer eingegeben werden;
wobei das erste Sendemodul konfiguriert ist, um die Klartextinformationen unter Verwendung einer vorbestimmten Kommunikationsschnittstelle an eine erweiterte Ausführungsumgebung zu senden, wobei eine Sicherheits- und Vertrauensstufe der erweiterten Ausführungsumgebung höher ist als eine Sicherheits- und Vertrauensstufe der ersten Ausführungsumgebung;
wobei das Verschlüsselungsmodul konfiguriert ist, um in der erweiterten Ausführungsumgebung eine Verschlüsselungsverarbeitung an den Klartextinformationen durchzuführen, um Chiffretextinformationen zu erhalten; und
wobei das zweite Sendemodul konfiguriert ist, um die Chiffretextinformationen an ein zweites Mobilgerät zu senden;
wobei, nach dem Senden, durch das erste Mobilgerät, der Chiffretextinformationen an das zweite Mobilgerät, wenn der erste Benutzer anfordert, die Chiffretextinformationen anzusehen, das erste Mobilgerät ferner für Folgendes konfiguriert ist:
Überwachen in Echtzeit, durch das erste Mobilgerät, ob ein erstes biometrisches Merkmal, das durch den ersten Benutzer eingegeben wird, intermittierend ist oder verschwindet; und
wenn das erste biometrische Merkmal, das durch den ersten Benutzer eingegeben wird, intermittierend ist oder verschwindet, Stoppen einer Entschlüsselungsverarbeitung, und Stoppen eines Präsentierens der Klartextinformationen und Vernichten der Klartextinformationen.

11. Erstes Mobilgerät nach Anspruch 10, wobei die erweiterte Ausführungsumgebung eine vertrauenswürdige Ausführungsumgebung (*trusted execution environment* - TEE) ist.

12. Erstes Mobilgerät nach Anspruch 10 oder 11, wobei die erweiterte Ausführungsumgebung eine zweite Ausführungsumgebung und eine dritte Ausführungsumgebung umfasst, wobei die zweite Ausführungsumgebung eine TEE ist und die dritte Ausführungsumgebung eine Sicherheitselement-Ausführungsumgebung (*security element execution environment* - SE) ist.

13. Zweites Mobilgerät, wobei das zweite Mobilgerät ein Empfangsmodul (201), ein Sendemodul (202), ein Entschlüsselungsmodul (203) und ein Präsentationsmodul (204) umfasst, wobei das Empfangsmodul konfiguriert ist, um in einer ersten Ausführungsumgebung Chiffretextinformationen von einem ersten Mobilgerät zu empfangen;
wobei das Sendemodul konfiguriert ist, um die Chiffretextinformationen an eine erweiterte Ausführungsumgebung unter Verwendung einer vorbestimmten Kommunikationsschnittstelle zu senden, wobei eine Sicherheits- und Vertrauensstufe der erweiterten Ausführungsumgebung höher ist als eine Sicherheits- und Vertrauensstufe der ersten Ausführungsumgebung;
wobei das Entschlüsselungsmodul konfiguriert ist, um in der erweiterten Ausführungsumgebung eine Entschlüsselungsverarbeitung an den Chiffretextinformationen durchzuführen, um Klartextinformationen zu erhalten; und wobei das Präsentationsmodul konfiguriert ist, um die Klartextinformationen einem zweiten Benutzer zu präsentieren;
wobei das zweite Mobilgerät ferner für Folgendes konfiguriert ist:
Überwachen in Echtzeit, durch das zweite Mobilgerät, ob ein erstes biometrisches Merkmal, das durch den zweiten Benutzer eingegeben wird, intermittierend ist oder verschwindet; und
wenn das erste biometrische Merkmal, das durch den zweiten Benutzer eingegeben wird, intermittierend ist oder verschwindet, Stoppen der Entschlüsselungsverarbeitung oder Stoppen des Präsentierens der Klartextinformationen und Vernichten der Klartextinformationen.

14. Zweites Mobilgerät nach Anspruch 13, wobei die erweiterte Ausführungsumgebung eine zweite Ausführungsumgebung und eine dritte Ausführungsumgebung umfasst; und wobei die Bestimmungseinheit speziell für Folgendes konfiguriert ist:
Bestimmen, in der zweiten Ausführungsumgebung, dass das durch den ersten Benutzer eingegebene erste biometrische Merkmal mit dem vorgespeicherten zweiten biometrischen Merkmal in der zweiten Ausführungsumgebung übereinstimmt; oder
Bestimmen, in der dritten Ausführungsumgebung, dass das durch den ersten Benutzer eingegebene erste biometrische Merkmal mit dem vorgespeicherten zweiten biometrischen Merkmal in der zweiten Ausführungsumgebung übereinstimmt; oder getrenntes Bestimmen, in der zweiten Ausführungsumgebung und der dritten Ausführungsumgebung, dass das durch den zweiten Benutzer eingegebene erste biometrische Merkmal mit dem in der zweiten Ausführungsumgebung vorgespeicherten zweiten biometrischen Merkmal übereinstimmt.

## Revendications

1. Procédé de transmission d'informations, le procédé comprenant :
la réception (S101), par un premier dispositif mobile, dans un premier environnement d'exécution, d'informations de texte en clair entrées par un premier utilisateur, et l'envoi des informations de texte en clair à un environnement d'exécution avancé en utilisant une interface de communication prédéterminée, un niveau de sécurité et de confiance de l'environnement d'exécution avancé étant supérieur à un niveau de sécurité et de confiance du premier environnement d'exécution ;
l'exécution (S102), par le premier dispositif mobile, dans l'environnement d'exécution avancé, d'un traitement de chiffrement sur les informations de texte en clair, pour obtenir des informations de texte chiffré ; et
l'envoi (S103), par le premier dispositif mobile, des informations de texte chiffré à un second dispositif mobile ;
après l'envoi, par le premier dispositif mobile, des informations de texte chiffré au second dispositif mobile, lorsque le premier utilisateur demande à visualiser les informations de texte chiffré, le procédé comprenant en outre :
le fait de surveiller en temps réel, par le premier dispositif mobile, si une empreinte digitale présentée par le premier utilisateur sur un capteur d'empreinte digitale est reconnue ; et
si l'empreinte digitale du premier utilisateur quitte le capteur d'empreinte digitale ou si la reconnaissance d'empreinte digitale échoue, l'arrêt d'un traitement de déchiffrement et l'arrêt de la présentation des informations de texte en clair et la destruction des informations de texte en clair.

2. Procédé selon la revendication 1, avant l'envoi, par le premier dispositif mobile, des informations de texte chiffré au second dispositif mobile, le procédé comprenant en outre :
l'obtention, par le premier dispositif mobile, dans l'environnement d'exécution avancé, d'une première caractéristique biométrique entrée par le premier utilisateur ; et
l'envoi, par le premier dispositif mobile, des informations de texte chiffré au second dispositif mobile comprenant :
l'envoi des informations de texte chiffré au second dispositif mobile lorsque le premier dispositif mobile détermine, dans l'environnement d'exécution avancé, que la première caractéristique biométrique entrée par le premier utilisateur correspond à une seconde caractéristique biométrique préenregistrée dans l'environnement d'exécution avancé.

3. Procédé selon la revendication 1, avant l'envoi, par le premier dispositif mobile, des informations de texte chiffré au second dispositif mobile, le procédé comprenant en outre :
l'obtention, par le premier dispositif mobile, dans le premier environnement d'exécution, d'une première caractéristique biométrique entrée par le premier utilisateur ; et
l'envoi, par le premier dispositif mobile, de la première caractéristique biométrique à l'environnement d'exécution avancé en utilisant l'interface de communication prédéterminée ; et
l'envoi, par le premier dispositif mobile, des informations de texte chiffré à un second dispositif mobile comprenant :
l'envoi des informations de texte chiffré au second dispositif mobile lorsque le premier dispositif mobile détermine, dans l'environnement d'exécution avancé, que la première caractéristique biométrique entrée par le premier utilisateur correspond à une seconde caractéristique biométrique préenregistrée dans l'environnement d'exécution avancé.

4. Procédé selon la revendication 1, avant l'exécution, par le premier dispositif mobile, dans l'environnement d'exécution avancé, d'un traitement de chiffrement sur les informations de texte en clair, pour obtenir des informations de texte chiffré, le procédé comprenant en outre :
l'obtention, par le premier dispositif mobile, dans l'environnement d'exécution avancé, d'une première caractéristique biométrique entrée par le premier utilisateur ; et
l'exécution, par le premier dispositif mobile, dans l'environnement d'exécution avancé, d'un traitement de chiffrement sur les informations de texte en clair, pour obtenir des informations de texte chiffré comprenant :
lorsque le premier dispositif mobile détermine, dans l'environnement d'exécution avancé, que la première caractéristique biométrique entrée par le premier utilisateur correspond à une seconde caractéristique biométrique préenregistrée dans l'environnement d'exécution avancé, la signature des informations de texte en clair en utilisant une clé de signature, la clé de signature étant préenregistrée dans l'environnement d'exécution avancé ; et
l'exécution, par le premier dispositif mobile, dans l'environnement d'exécution avancé, d'un traitement de chiffrement sur les informations de texte en clair et sur la signature, pour obtenir des informations de texte chiffré comprenant la signature.

5. Procédé selon la revendication 1, avant d'effectuer, par le premier dispositif mobile, dans l'environnement d'exécution avancé, un traitement de chiffrement sur les informations de texte en clair, pour obtenir des informations de texte chiffré, le procédé comprenant en outre :
l'obtention, par le premier dispositif mobile, dans le premier environnement d'exécution, d'une première caractéristique biométrique entrée par le premier utilisateur ; et
l'envoi, par le premier dispositif mobile, de la première caractéristique biométrique à l'environnement d'exécution avancé en utilisant l'interface de communication prédéterminée ; et
l'exécution, par le premier dispositif mobile, dans l'environnement d'exécution avancé, d'un traitement de chiffrement sur les informations de texte en clair, pour obtenir des informations de texte chiffré comprenant :
lorsque le premier dispositif mobile détermine, dans l'environnement d'exécution avancé, que la première caractéristique biométrique entrée par le premier utilisateur correspond à une seconde caractéristique biométrique préenregistrée dans l'environnement d'exécution avancé, la signature des informations de texte en clair en utilisant une clé de signature, la clé de signature étant préenregistrée dans l'environnement d'exécution avancé ; et
l'exécution, par le premier dispositif mobile, dans l'environnement d'exécution avancé, d'un traitement de chiffrement sur les informations de texte en clair et sur la signature, pour obtenir des informations de texte chiffré comprenant la signature.

6. Procédé de transmission d'informations, le procédé comprenant :
la réception (S201), par un second dispositif mobile, dans un premier environnement d'exécution, des informations de texte chiffré à partir d'un premier dispositif mobile, et l'envoi des informations de texte chiffré à un environnement d'exécution avancé en utilisant une interface de communication prédéterminée, un niveau de sécurité et de confiance de l'environnement d'exécution avancé étant supérieur à un niveau de sécurité et de confiance du premier environnement d'exécution ;
l'exécution (S202), par le second dispositif mobile, dans l'environnement d'exécution avancé, d'un traitement de déchiffrement sur les informations de texte chiffré, pour obtenir des informations de texte en clair ; et
la présentation (S203), par le second dispositif mobile, des informations de texte en clair à un second utilisateur ;
le procédé comprenant en outre :
le fait de surveiller en temps réel, par le second dispositif mobile, si une première caractéristique biométrique entrée par le second utilisateur est intermittente ou disparaît ; et
si la première caractéristique biométrique entrée par le second utilisateur est intermittente ou disparaît, l'arrêt du traitement de déchiffrement ou l'arrêt de la présentation des informations de texte en clair et la destruction des informations de texte en clair.

7. Procédé selon la revendication 6, avant l'exécution, par le second dispositif mobile, dans l'environnement d'exécution avancé, d'un traitement de déchiffrement sur les informations de texte chiffré, pour obtenir des informations de texte en clair, le procédé comprenant en outre :
l'obtention, par le second dispositif mobile, dans l'environnement d'exécution avancé, de la première caractéristique biométrique entrée par le second utilisateur ; et
l'exécution, par le second dispositif mobile, dans l'environnement d'exécution avancé, d'un traitement de déchiffrement sur les informations de texte chiffré, pour obtenir des informations de texte en clair comprenant :
l'exécution d'un traitement de déchiffrement sur les informations de texte chiffré lorsque le second dispositif mobile détermine, dans l'environnement d'exécution avancé, que la première caractéristique biométrique entrée par le second utilisateur correspond à une seconde caractéristique biométrique préenregistrée dans l'environnement d'exécution avancé, pour obtenir les informations de texte en clair.

8. Procédé selon la revendication 6, avant l'exécution, par le second dispositif mobile, dans l'environnement d'exécution avancé, d'un traitement de déchiffrement sur les informations de texte chiffré, pour obtenir des informations de texte en clair, le procédé comprenant en outre :
l'obtention, par le second dispositif mobile, dans le premier environnement d'exécution, de la première caractéristique biométrique entrée par le second utilisateur ; et
l'envoi, par le second dispositif mobile, de la première caractéristique biométrique à l'environnement d'exécution avancé en utilisant l'interface de communication prédéterminée ; et
l'exécution, par le second dispositif mobile, dans l'environnement d'exécution avancé, d'un traitement de déchiffrement sur les informations de texte chiffré, pour obtenir des informations de texte en clair comprenant :
l'exécution d'un traitement de déchiffrement sur les informations de texte chiffré lorsque le second dispositif mobile détermine, dans l'environnement d'exécution avancé, que la première caractéristique biométrique entrée par le second utilisateur correspond à une seconde caractéristique biométrique préenregistrée dans l'environnement d'exécution avancé, pour obtenir les informations de texte en clair.

9. Procédé selon la revendication 7 ou 8, selon lequel les informations de texte chiffré sont des informations de texte chiffré comprenant une signature ; et
l'exécution d'un traitement de déchiffrement sur les informations de texte chiffré lorsque le second dispositif mobile détermine, dans l'environnement d'exécution avancé, que la première caractéristique biométrique entrée par le second utilisateur correspond à une seconde caractéristique biométrique préenregistrée dans l'environnement d'exécution avancé, pour obtenir les informations de texte en clair comprend :
l'exécution d'un traitement de déchiffrement sur les informations de texte chiffré lorsque le second dispositif mobile détermine, dans l'environnement d'exécution avancé, que la première caractéristique biométrique entrée par le second utilisateur correspond à la seconde caractéristique biométrique préenregistrée dans l'environnement d'exécution avancé, pour obtenir les informations de texte en clair et la signature ; et
la vérification, par le second dispositif mobile, dans l'environnement d'exécution avancé, de la signature en utilisant une clé de vérification de signature correspondante, et la détermination du fait que la vérification réussit, la clé de vérification de signature étant préenregistrée dans l'environnement d'exécution avancé.

10. Premier dispositif mobile, le premier dispositif mobile comprenant un module de réception (101), un premier module d'envoi (102), un module de chiffrement (103) et un second module d'envoi (104), le module de réception étant configuré pour recevoir, dans un premier environnement d'exécution, des informations de texte en clair entrées par un premier utilisateur ;
le premier module d'envoi étant configuré pour envoyer les informations de texte en clair à un environnement d'exécution avancé en utilisant une interface de communication prédéterminée, un niveau de sécurité et de confiance de l'environnement d'exécution avancé étant supérieur à un niveau de sécurité et de confiance du premier environnement d'exécution ;
le module de chiffrement étant configuré pour effectuer, dans l'environnement d'exécution avancé, un traitement de chiffrement sur les informations de texte en clair, pour obtenir des informations de texte chiffré ; et
le second module d'envoi étant configuré pour envoyer les informations de texte chiffré à un second dispositif mobile ;
après l'envoi, par le premier dispositif mobile, des informations de texte chiffré au second dispositif mobile, lorsque le premier utilisateur demande à visualiser les informations de texte chiffré, le premier dispositif mobile étant en outre configuré pour :
surveiller en temps réel, par le premier dispositif mobile, si une première caractéristique biométrique entrée par le premier utilisateur est intermittente ou disparaît ; et
si la première caractéristique biométrique entrée par le premier utilisateur est intermittente ou disparaît, arrêter un traitement de déchiffrement, et arrêter la présentation des informations de texte en clair et détruire les informations de texte en clair.

11. Premier dispositif mobile selon la revendication 10, dans lequel l'environnement d'exécution avancé est un environnement d'exécution de confiance TEE.

12. Premier dispositif mobile selon la revendication 10 ou 11, dans lequel l'environnement d'exécution avancé comprend un deuxième environnement d'exécution et un troisième environnement d'exécution, le deuxième environnement d'exécution est un environnement d'exécution de confiance TEE et le troisième environnement d'exécution est un environnement d'exécution d'élément de sécurité SE.

13. Second dispositif mobile, le second dispositif mobile comprenant un module de réception (201), un module d'envoi (202), un module de déchiffrement (203) et un module de présentation (204), le module de réception étant configuré pour recevoir, dans un premier environnement d'exécution, des informations de texte chiffré provenant d'un premier dispositif mobile ;
le module d'envoi étant configuré pour envoyer les informations de texte chiffré à un environnement d'exécution avancé en utilisant une interface de communication prédéterminée, un niveau de sécurité et de confiance de l'environnement d'exécution avancé étant supérieur à un niveau de sécurité et de confiance du premier environnement d'exécution ;
le module de déchiffrement étant configuré pour effectuer, dans l'environnement d'exécution avancé, un traitement de déchiffrement sur les informations de texte chiffré, pour obtenir des informations de texte en clair ; et
le module de présentation étant configuré pour présenter les informations de texte en clair à un second utilisateur ;
le second dispositif mobile étant en outre configuré pour :
le fait de surveiller en temps réel, par le second dispositif mobile, si une première caractéristique biométrique entrée par le second utilisateur est intermittente ou disparaît ; et
si la première caractéristique biométrique entrée par le second utilisateur est intermittente ou disparaît, l'arrêt du traitement de déchiffrement ou l'arrêt de la présentation des informations de texte en clair et la destruction des informations de texte en clair.

14. Second dispositif mobile selon la revendication 13, dans lequel l'environnement d'exécution avancé comprend un deuxième environnement d'exécution et un troisième environnement d'exécution ; et
dans lequel l'unité de détermination est spécifiquement configurée pour :
déterminer, dans le deuxième environnement d'exécution, que la première caractéristique biométrique entrée par le second utilisateur correspond à la seconde caractéristique biométrique préenregistrée dans le deuxième environnement d'exécution ; ou
déterminer, dans le troisième environnement d'exécution, que la première caractéristique biométrique entrée par le second utilisateur correspond à la seconde caractéristique biométrique préenregistrée dans le deuxième environnement d'exécution ; ou
déterminer séparément, dans le deuxième environnement d'exécution et le troisième environnement d'exécution, que la première caractéristique biométrique entrée par le second utilisateur correspond à la seconde caractéristique biométrique préenregistrée dans le deuxième environnement d'exécution.
